# EUROPEAN PATENT APPLICATION

(11) **EP 0 957 448 A2**
(43) Date of publication of application: **17.11.1999**
(21) Application number: 99303779.5
(22) Date of filing: 14.05.1999
(51) Int. Cl.: G06K 17/00, G06K 7/10, G06K 11/18

(54) **Optical code reader mouse**

(30) Priority: 15.05.1998 US 85628 P
(71) Applicant: PSC Scanning, Inc., Eugene, Oregon 97409-9150 (US)
(72) Inventor: McCallister, Clarke William, Eugene, Oregon 97405 (US); Cherry, Craig D., Eugene, Oregon 97405 (US); Deloge, Steve P., Rochester, New York 14622 (US); La, Chay K., Rochester, New York 14623 (US)
(74) Representative: Pratt, David Martin

(57) **Abstract**

An optical code reader mouse device utilizes an imager, such as a CCD or CMOS imaging array to image printed indicia including symbols. The optical code reader may be utilized as a code reader, a video camera, to indicate relative movement between the device and a surface, and for other various imaging functions. Thus, the optical code reader may also have no internally moving parts utilized for sensing relative movement. The optical *code* reader may function similar to a conventional mouse, except that the relative motion is sensed by the imager. The optical code reader may detect the relative movement of artifacts across its field of view in any arbitrary direction within the focal length setting of the device. The optical code reader may also be incorporated into a laptop and a pen based computer, and a PDA. Relative motion may be sensed when moving either the housing or the surface itself, or both, relative to the other. In the portable data processing embodiments, the optical code reader may also be utilized as a code reader a video camera, to indicate relative movement between the device and a surface, and for other various fringing functions. The surface may include a finger, a hand, or the "pen" of the pen based computer, or almost any object within the field of view. Also, various modes and mcthods described herein may be utilized with the optical code reader.

## Description

### Background of the Invention

The present invention relates to a computer "mouse" device that is used to provide input to a computer, the mouse capable of providing relative tracking data with respect to a surface, and providing outputs representing the relative position of the mouse with respect to the surface. Further, the present invention relates to a mouse that is able to provide output of relative movement and also capable of capturing images, such as printed indicia and human readable text characters. The instant Application also incorporates by reference, as though fully set forth herein, the related Provisional Application No. 60/085,628 filed May 15, 1998, entitled "PC-Mouse/Imager. "

### Description of the Prior Art

Prior art mechanisms for a computer mouse generally includes a ball element that is rotated when the mouse is moved across a surface such as a mouse pad. In addition, the prior art teaches a combined mouse and bar code scanner as taught in U.S. Patent Nos. 5,448,050 and 5,814,804 to D. Kostizak, and assigned to the same assignee as herein. Both of these two patents are incorporated by reference as though fully set forth herein.

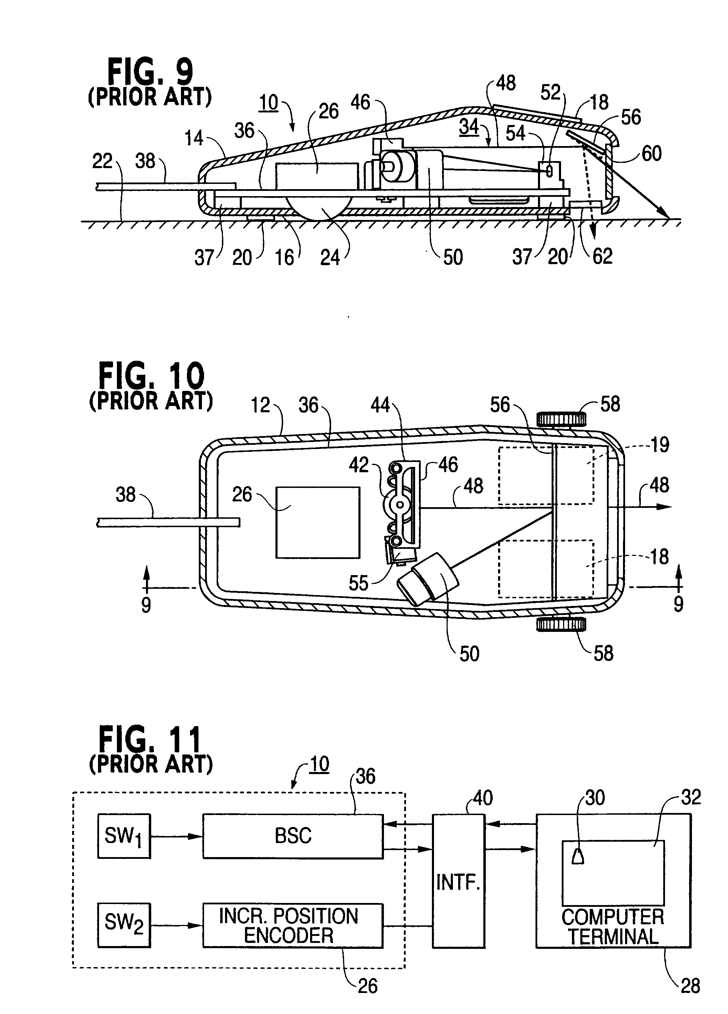

The prior art systems as disclosed in the Kostizak patents are described in relation to Figures 9 and 10 of the instant Application. Referring to Figures 9 and 10, there is shown a conventional integrated bar code reader and location detection apparatus having a shape and size of, and operative in a manner similar to, a computer mouse. Accordingly, the apparatus is referred to as a bar code reading mouse 10. The mouse 10 has a housing 12 that has top and bottom parts 14 and 16, that may snap together along a horizontal parting joint (not shown), The upper part of the housing 14 defines the top of the mouse 10 and the bottom part 16 defines the bottom of the mouse. The top has a pair of keys 18 and 19, the location of which is shown by the dash line boxes in Figure 10. These keys operate electrical switches SW₁ and SW₂ as shown in Figure 11. The bottom of the housing 12 has pads 20 that space the housing from a surface 22 upon which bar codes appear. The spacing is such that a ball 24 of an incremental encoder 26 contacts and engages the surface 22 and can roll universally as the mouse is moved in any direction along the surface 22.

The incremental encoder 26 may be of the type conventionally used in computer mice. It provides an output indicating the relative displacement of the mouse along the surface 22. This displacement is converted by software in a computer terminal 28, as shown in Figure 11, so that the display screen 32 of the terminal 28 indicates a representation 30 of the location of the mouse. The prior Kostizak patent states that instead of a mechanical encoder type mouse location detection means, an optical encoder may be used, in which use the surface 22 may be inscribed with orthogonal lines to which the optical encoder responds.

Continuing with the description of Figures 9-11, reading of the bar codes is provided by a scan engine 34 having electrical and optical components mounted on a printed circuit board 36. This board 36 also mounts the encoder 26 and supports the ball 24. Electrical circuit paths, or traces, and terminals from the electrical components, that are connected to the traces on the board 36, are not shown to simplify the illustration. These circuits are connected to leads in a cable 38, that is a flexible cable extending from the mouse 10 to the computer terminal 28 of Figure 11. The computer terminal, or the board 36, may have components that provide an interface 40 that processes the output signals generated in the mouse 10. The computer terminal may also provide input signals for controlling the operation of the mouse 10, as will be explained hereinafter. The interface 40 may include signal conditioning means, decoders, and/or multiplexers of the type conventionally used to implement the interface functions.

The scan engine 34 is of a design similar to the design of the scan engine described in U.S. Patent No. 5,200,597 issued April 6, 1993, by Jay M. Eastman, et al., and assigned to the same assignee as the present Application, and is incorporated by reference as though fully set forth herein.

In the scan engine, a motor 42 pivots a mount 44 having a reflective surface 46 that projects a scanning beam 48. This beam is generated by a laser diode in a barrel or mount 50, that reflects from a facet 52 of a light collecting mirror 54. The collected light is reflected by the mirror 54 to a photo detector 55 and converted into analog bar code signals. These signals may be processed and decoded by circuits, including integrated circuit chips containing microprocessor devices and memory that are located on the board 36, but not shown in order to simplify the illustration. The board is mounted by mounts 37 on the inside surface of the bottom of the housing 12. When portable operation is desired, batteries can be carried on board the mouse. Radio, optical, e.g., infra-red, or acoustic links instead of wires may be used.

The scan beam 48 is incident on a port mirror 56 of a mirror assembly that includes knobs 58 extending from the sides of the housing 12. The port mirror 56 folds the scan beam 48 so that it is deflected downwardly toward the surface 22 through either a front window or port 60 in the front end of the housing or a bottom window or port 62 in the bottom of the housing. For example, these ports may be covered by transparent plates, or instead may contain lenses for focusing the beam at the surface 22 or collimating the beam.

In a first mode of operation, the mouse is tracked along the surface 22 to the proximity of a bar code. Then SW₂ is actuated by operating the key 19 to provide an output through the interface to the terminal indicative of the location of the mouse in a scanning position with respect to a selected code on the surface. Then SW₁ is actuated by the operating key 18 and the bar code scanner is enabled to provide a bar code signal output through the interface to the terminal, that processes, and/or displays the output or a code corresponding thereto, or may store that code in a memory associated with the computer in the terminal.

In another mode of operation of the device, the computer is programmed (information being stored in its memory/database) as to the position of bar codes on the surface to be read. Then outputs are provided by the computer in response to location information from the encoder 26 relayed to the computer via the interface 40. The computer generates an output that, alternatively to SWI, enables the bar code scanner 34 to scan the code. Then only selected codes on the surface will be scanned. Also, the mouse may be lifted from the surface 22, pointed at a bar code (e.g., on a package) and SW₁ operated to scan and read the bar code. Thus, the mouse is operative even when it is not placed on the surface 22 or another surface (e.g., the surface of the package).

Moreover, the above described conventional integrated bar code reading and location mouse is able to read one dimensional bar codes placed upon a surface upon which the mouse operates. However, the conventional mouse is only able to lift, e.g., bar codes from surfaces The conventional mouse does not capture graphic data, for example, such as photographs or art, with the same imaging device that supplies the X-Y relative movement data of the mouse to the computer display.

Several problems arise from the use of the aforementioned bar code reading and location mouse as well as all mice in general. First, typically, the incremental encoder 26 comprises a mechanical track ball that is highly prone to collecting dust, lint, dirt, and grime. As the mouse is operated, this dust, lint, dirt, and grime contaminates the inner workings of the incremental encoder 26 and either causes it to intermittently malfunction or to stop functioning entirely. The conventional mouse design and assembly also require a number of moving parts as well as a relatively large number of parts to assemble, thus, often decreasing its reliability while increasing its manufacturing cost. Also, a conventional mouse is not able to detect the relative movement of artifacts across its field of view, in any arbitrary direction within the desk top plane.

One attempt to solve some of the problems with ball driven mouse designs is to utilize an infra-red ("IR") Light Emitting Diode ("LED") for one axis, and a visible LED is utilized for a second axis of movement. A special pad must be provided with referenced grids printed upon it in order to provide a method to contrast the two wave lengths of light supplied by the IR and visible LEDs. Thus, the mouse may only be used if the special pad is available. Unfortunately, even if the pad is available, another problem arises if the pad is rotated. If rotated from its preset orientation, the cursor display provided by the optical mouse will not move in the direction that a user might intuitively expect it to, i.e., as would a mouse utilizing a conventional track ball mechanism. Instead, because the optical mouse senses movement relative to the "x" and "y" grid on the pad, a non-intuitive movement of the cursor on the display occurs, at any time the pad was rotated out of the pre-designated position.

Accordingly, it is an object of the instant invention to provide an improved device and method of sensing relative motion that may reduce or eliminate the need or desire for a special pad, and further may be utilized to reduce or eliminate a non-intuitive cursor response when the surface is rotated relative to the mouse.

Another object of the instant invention is to provide an improved device and method of sensing that may be utilized to recognize machine decodable symbols, such as one or two-dimensional bar codes. Another object of the instant invention is to provide an improved device and method of sensing that may be utilized to recognize text, so as to apply optical character recognition ("OCR") techniques. It is a further object of the invention is to provide an improved device and method of sensing that may be utilized as a video system or video camera.

Yet another object of the invention is to provide an improved device and method of sensing that may be utilized to generate a mouse cursor function, wherein the mouse sensor is relatively stationary as compared to the surface. It is a further object of the invention to provide an improved device and method of sensing that may be utilized to generate a cursor signal intuitively similar to the user as if utilizing a portable computer touchpad device. Another object of the instant invention is to provide an improved device and method of sensing wherein the relatively stationary mouse sensor may be utilized as a video conference camera or video system.

It is a further object of the invention to provide an improved device and method of sensing that may be utilized as a mouse that has an adjustable lens function for altering or adjusting the focal length of the mouse so that the mouse may be used for a plurality of imaging functions comprising at least some of those functions described herein. It is another object of the invention to provide an improved device and method of sensing that may be utilized with an automatic or software controlled variable focus lens assembly.

It is another object of the invention to provide an improved device and method of sensing that may be utilized to provide the user with a visual representation of the area to be imaged by the mouse.

Finally, an object of the present invention is to provide a solution for at least some of these aforementioned problems.

### Summary of the Invention

Briefly described, the present invention provides for a computer imaging mouse device that utilizes a CMOS imaging array to both monitor a relative movement of the mouse with respect to a surface as well as capture images, such as printed indicia. The computer imaging mouse preferably has no internally moving parts such as a mouse ball or a mouse ball mechanism for sensing an X-Y displacement.

The imager mouse provides an X-Y displacement indication for use on a computer display similar to a conventional mouse, except that the motion induced by the operator is sensed by a CMOS imaging array that detects relative movement of artifacts across its field of view, in any arbitrary direction within the focal length setting of the imager mouse. The imager mouse can be used to capture printed indicia, such as bar codes, stacked bar codes, matrix codes or other printed symbols which are machine decodable. However, the imager mouse can also be used as a scanner, capable of incrementally reading printed symbols extending beyond the immediate field of view of an imager mouse window. If either the imager mouse and a surface are moved relative to each other, images may be captured in real time, passed to the host computer, and then assembled into an electronic representation of the scanned image, while using directional displacement cues from the mouse.

### Brief Description of the Drawings

The invention is described in detail herein with reference to the drawings in which:
Figure 1A illustrates a side view of a code reading and mouse device resulting from the practice of the invention;
Figure 1B illustrates a top view of a code reading and mouse device resulting from the practice of the invention;
Figure 1C illustrates a cross-sectional top view of a code reading and mouse device resulting from the practice of the invention, the section being taken along the line 1C-1C in Figure 1A;
Figure 2A illustrates a side view of another mouse device resulting from the practice of the invention;
Figure 2B illustrates a top view of another mouse device resulting from the practice of the invention;
Figure 2C illustrates a cross-sectional top view of another mouse device resulting from the practice of the invention, the section being taken along the line 2C-2C in Figure 2A;
Figure 3A illustrates a side view of another code reading and mouse device resulting from the practice of the invention;
Figure 3B illustrates a top view of another code reading and mouse device resulting from the practice of the invention;
Figure 3C illustrates a cross-sectional top view of another code reading and mouse device resulting from the practice of the invention, the section being taken along the line 3C-3C in Figure 3A;
Figure 3D illustrates a top view of another code reading and mouse device resulting from the practice of the invention;
Figure 4A is a top view of a symbol that may be utilized in the practice of the invention;
Figures 4B-C illustrate a method of capture of another symbol that may be utilized in the practice of the invention;
Figure 4D illustrate another method of capture of a symbol that may be utilized in the practice of the invention;
Figure 5A is a cross-sectional side view of a lens device that may be utilized in the practice of the invention, the section being taken along the line 5A-5A in Figure 5B;
Figure 5B is a front view of the lens device of Figure 5A that may be utilized in the practice of the invention;
Figure 6 is a schematic block diagram of another arrangement of the device, as shown in Figures 1-3, that may be utilized in the practice of the invention;
Figures 7A-B are block diagrams of alternate arrangements that may be utilized in the practice of the invention;
Figure 8 is a block diagram of another alternate arrangement that may be utilized in the practice of the invention;
Figure 9 is a cross-sectional side view of an integrated bar code reading and location mouse device, the section being taken along the line 9-9 in Figure 10;
Figure 10 is a top view of the device shown in Figure 9 with the top of the housing removed to illustrate the reading and location components therein;
Figure 11 is a schematic block diagram of a typical installation of the device shown in Figures 9 and 10;

The accompanying drawings, wherein like numerals denote like elements, are incorporated into and constitute a part of the specification, and illustrate presently preferred exemplary embodiments of the invention. The drawings, together with the general description given above, and in the detailed description of the preferred embodiments given below, serve to explain the principles of the invention.

### Detailed Description of the Preferred Embodiment

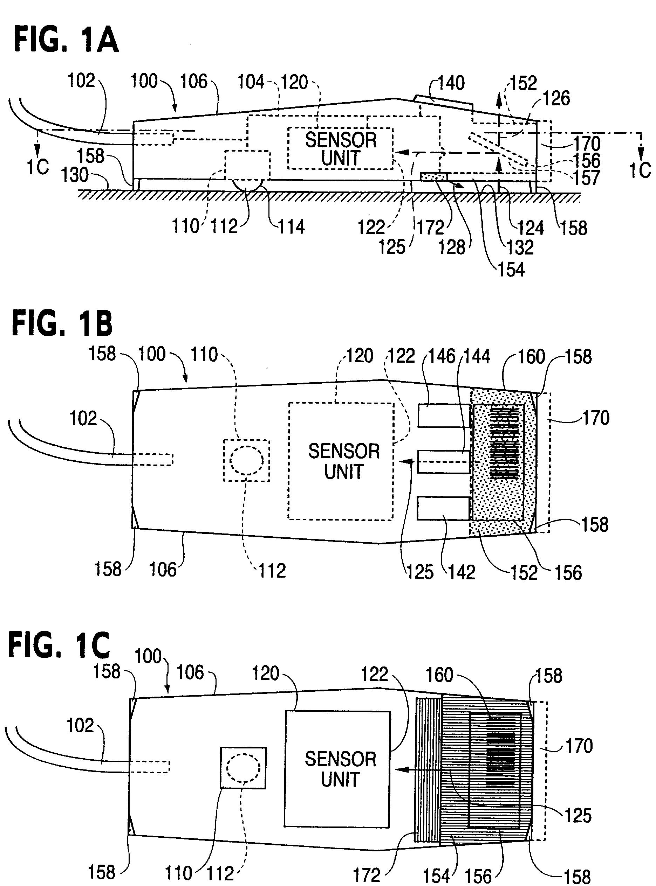

The instant invention is illustrated utilizing a computer mouse device. Figures 1-8 illustrate-various techniques and alternatives in the practice of the current invention in the following description, the same reference numerals are utilized for substantially similar elements in Figures 1-11, for the purpose of clarity. However, it will be apparent to one skilled in the art, for example, that some of the "like" elements may not actually need to be substantially similar or identical in order to practice the invention. Also, embodiments of the invention, as one skilled in the art recognizes, may be practiced on devices with these variations, and differences, as well as on other alternate embodiments, and all are within the scope of this description and the appended claims.

Further, some of the bus and signal lines utilized in the practice of certain arrangements of the instant invention are shown in Figures 1-8. However, it will be understood by one skilled in the art that generally the electrical circuit paths, traces, terminals, and electrical components, and respective software components, that may comprise at least portions of the various arrangements of the instant invention as illustrated in Figures 1-8, are not shown, in order to simplify the illustrations.

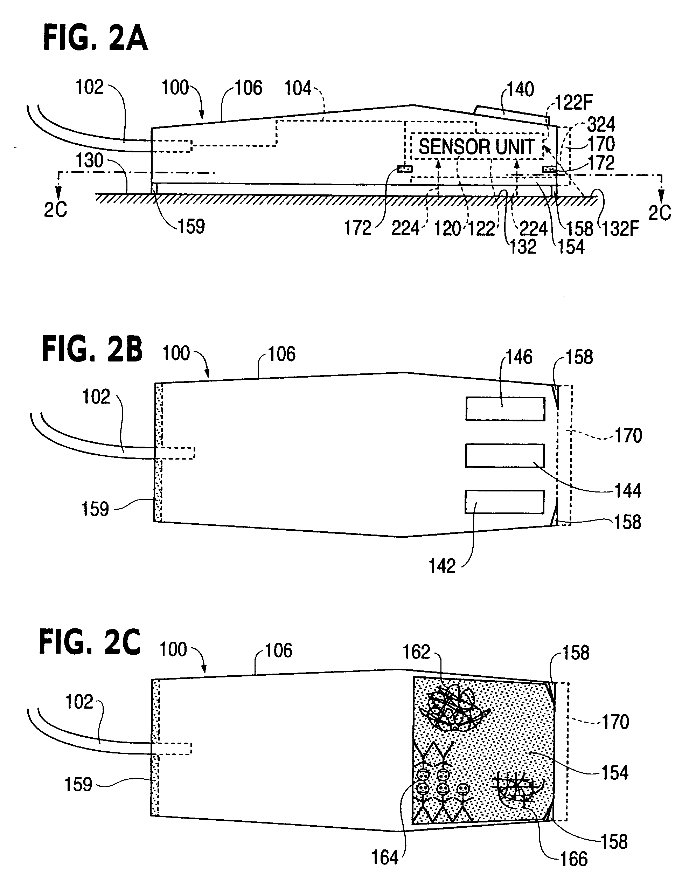

Figures 1A-C illustrate an arrangement of a device in the practice of the instant invention, namely a computer mouse device 100. Figure 1A illustrates a side view of the mouse 100, and Figure 1B illustrates a top view of the computer mouse 100 of Figure 2A. Figure 1C illustrates a cross-sectional top view of the computer mouse 100 of Figure 2A, the section being taken along the line 1C-1C as shown in Figure 1A.

In Figure 1A, a portion of the mouse 100 comprises a rotatable physical surface contact device, here illustrated as a track ball detector 110, further comprising a track ball 112. The track ball surface 114 of the track ball 112 frictionally engages a surface area 130 over which the mouse 100 travels, preferably in a translational or "X-Y" type movement.

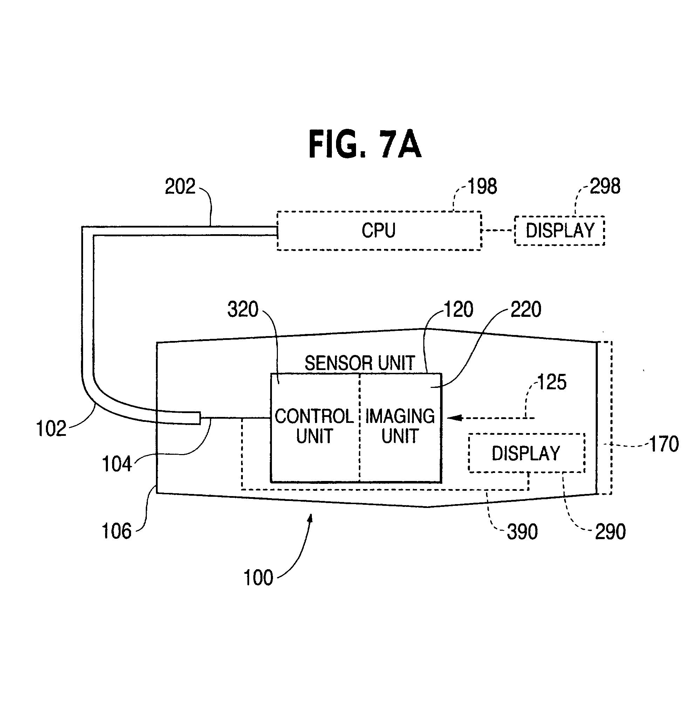

The spacing between the mouse housing 106 and the surface 114 of the track ball 112 allows the track ball to freely contact and engage the surface 130. The track ball detector 110 may preferably be of the type previously described and utilized in conventional computer mice as incremental encoders, e.g., similar to the incremental encoder 26 shown in Figures 9-10. In Figure 1A, the track ball detector 110 provides an output indicating the relative displacement of the mouse along the surface 130. Although not shown, a computer similar to the CPU shown in Figure 7A is preferably utilized, along with software, so that the location of the mouse 100 may be indicated as a cursor on a computer display device.

In order to provide a stable support during a translational movement of the mouse 100, a plurality of support feet 158 are attached to the mouse housing 106 so as to support the housing above the surface 130.

Another portion of the mouse housing 106 is comprised of switches, herein illustrated as mouse buttons 140. Mouse buttons 140 may comprise any number of buttons from one to as many as desired by the user in the practice of this invention. In this arrangement, as shown in Figure 1B, three buttons are preferable. The mouse buttons 140 comprise a right mouse button 142, a center mouse button 144, and a left mouse button 146. The mouse buttons are preferably utilized by the user as input devices. Although not preferable in this arrangement, it is also possible to practice this invention without utilizing or providing any mouse buttons.

In this arrangement, as shown in Figure 1A, the mouse 100 is preferably positioned, e.g., by the user, over a portion of the surface area 130 that comprises an area of interest. This area of interest may also be referred to as an area to be sensed or, namely, is an area to be imaged 132.

Preferably, the area to be imaged 132 reflects a first portion of light traveling from the area to be imaged 132 to a reflector surface 157 so as to comprise light path 124. Light traveling along light path 124 is then incident upon reflector surface 157 that comprises a portion of a reflector 156 that is suitably positioned in the interior of the mouse housing 106. A portion of the light incident upon reflector surface 157 is reflected and travels from the reflector surface 157 to the sensor unit 120 along a light path 125. The light that travels along light path 125 is delivered to the imaging unit, namely, a sensor array 122 contained in the sensor unit 120.

However, another portion of the light that travels along light path 124 is not reflected by reflector surface 157, but instead passes through reflector 156 so as to travel along light path 126, and thus also passes through view port area 152 so as to exit the mouse housing 106.

A sensor port area 154 is provided on the side of the mouse housing 106 that is adjacent to the area to be imaged 132, so that light is admitted into the housing 106 along light path 124, Light may be provided from a plurality of sources, of which only two sources are shown in Figure 1A.

For example, one source may comprise ambient light that may be admitted through an optional illumination window 170, so as to provide sufficient light to be reflected by the area to be imaged 132. Alternatively, one or a plurality of light emitting diodes ("LED") may form light source 172 to provide light along light path 128 to the area to be imaged 132. Of course, if desired, both these light sources may be used together.

Depending upon the size and shape of the mouse housing 106 desired, it is also possible to practice this invention without either the LED light source 172 nor the relatively large illumination window 170. Instead, ambient light, for example, as may be found in an office, home or school environment may be adequate, depending upon, e.g., the type and quality of sensor array 122 that is chosen to be utilized, and which operating mode or modes are desired, in the practice of this invention.

Upon receiving the reflected light, the sensor array 122 provides data to be output by the sensor unit 120 along mouse bus 104. In Figures 1A-C, the "X-Y" location of the mouse is determined by the track ball detector 110, and its representative output signal is also transmitted along the mouse bus 104. Also, the input signals from the mouse buttons 140 are transmitted along the mouse bus 104. Mouse bus 104 may be utilized both to communicate among the above-described various portions of the mouse 100, and may also be utilized to transmit signals and data between the mouse and an external device by utilizing mouse tail bus 102.

Of course, while Figures 1-3 are shown with a mouse tail bus 102 comprised of a "hard" connection, e.g., wires or fiber optic cables, the mouse tail bus 102 may also comprise a link provided through an infra-red connection, or may comprise any other wireless, e.g., light, radio frequency, or acoustic link transmission techniques.

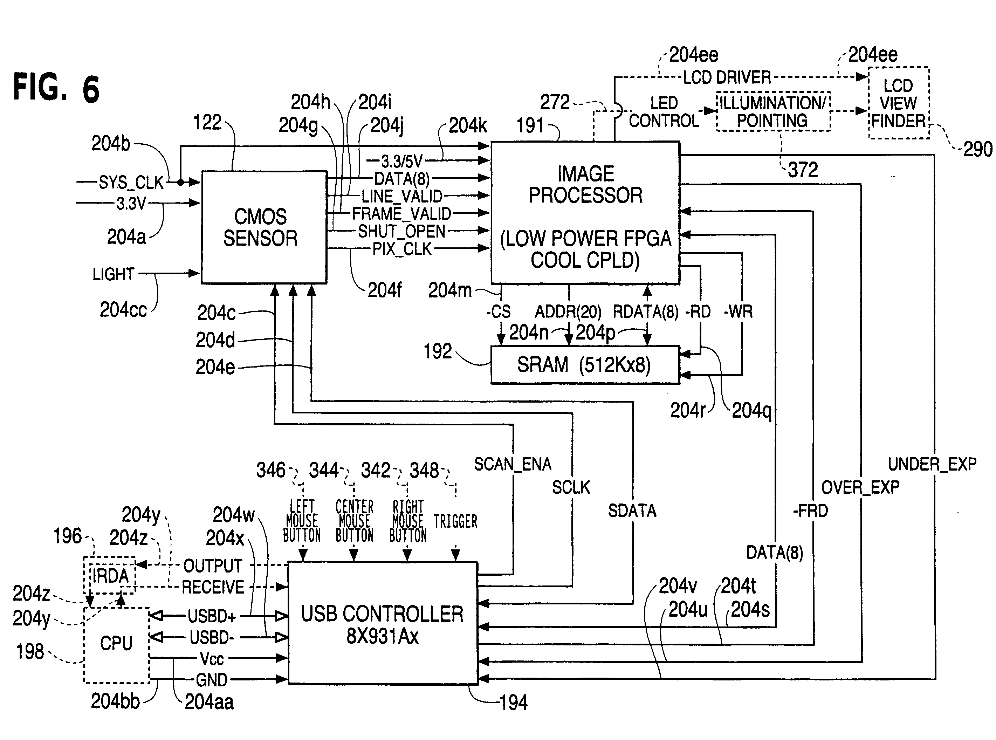

The sensor array 122 may comprise, for example, a charged coupled device ("CCD"), or comprise a Complimentary Metal Oxide Silicon ("CMOS") imager array. The sensor array 122 will be described in more detail in accordance with Figure 6.

The sensor unit 120 is capable of imaging almost anything contained on the area to be imaged 132. For example, Figures 1B and 1C illustrate a machine decodable symbol 160 that may be detected by the imager mouse 100. A preferable example of symbol 160 is a bar code.

As shown in Figures 1A-C, light is reflected from the symbol 160 and travels to the reflective surface 157 along light path 124 and then along light path 125 to the sensor array 122. Because of the orientation of light path 125, the sensor array 122 is considered to be pointing along a horizontal axis. In this arrangement, the vertical axis is comprised of light path 124 and light path 126. The semi-reflective surface 157 of the reflector 156 enables the sensor array and its focusing optics to be positioned off of, or removed from, the vertical optical axis with respect to the area to be imaged 132.

There is an advantage of pointing along a horizontal axis as represented by light path 125. The advantage is that the field of view, or optical focus area, of the sensor array 122, need not be as "short" as may be required if the sensor array 122 were located more optically close to the area to be imaged 132, so as to receive light directly from the vertical axis.

As shown in the preferred arrangement of Figures 1A-C, the user is provided with a see-through optical view port area 152 so that the user may view the area to be imaged 132 while the user is positioning the mouse. Alternatively, instead of the view port area 152, a liquid crystal display ("LCD") device, not shown, or other similar display device may comprise a portion of mouse 100. The alternate displays may be located in the same location as the mouse housing 106 that the view port area 152 occupies, if desired. In another alternative arrangement, both the view port area 152 optical window and the LCD display device may be provided. Of course, these viewing arrangements may each be located in areas other than that shown in Figures 1A-C in the practice of this invention. Also, the LCD display may be replaced by any other type of electronic display device.

Yet another alternative arrangement is to utilize the mouse internal bus 104 with either the mouse tail bus 102, or with any of the alternative external communication devices and methods previously described, so as to provide for a displayed image of the area to be imaged 132 on an external or remote display device, for example, a computer CRT. The image of the area to be imaged 132 is preferably displayed in "real time," as the mouse 100 is being moved or positioned by the user. This embodiment may be used with or without the view port area 152. In another alternative arrangement, the view port area 152 may be implemented as a magnifying lens to better enable the user to view the area to be imaged 132.

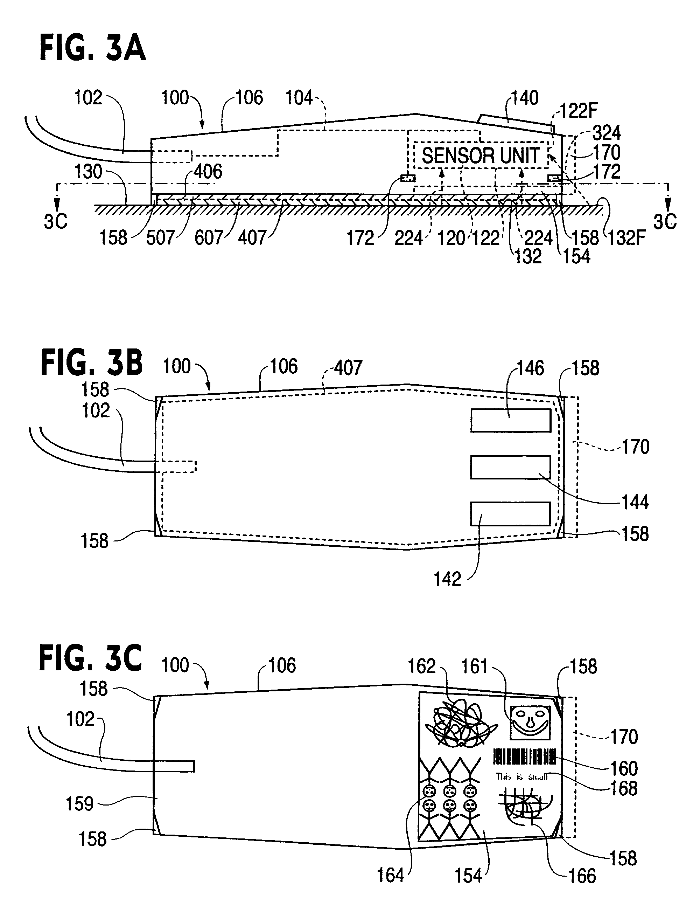

However, in the arrangements illustrated in Figures 1A-C, the mechanical track ball detector 110 has the same problems with accumulation of dirt and dust that conventional mice have. Thus, the arrangements as shown in Figures 2A-C and 3A-D are preferable to the arrangements described in Figures 1A-1C.

Figures 2A-C illustrate an arrangement of the mouse device 100, wherein Figure 2A illustrates a side view of the mouse 100, Figure 2B illustrates a top view of the mouse 100 of Figure 2A, and Figure 2C illustrates a top cross-sectional view of the mouse 100 shown in Figure 2A, the section being taken along the line 2C-2C in Figure 2A.

Unlike the mouse 100 device illustrated in Figures 1A-C, the mice 100 of Figures 2A-C and 3A-D eliminate the track ball detector 100 and the track ball 112 of the mouse 100 illustrated in Figures 1A-C. Thus, the translational, or X-Y, movement of the mouse is detected solely by the sensor unit 120, by utilizing the sensor array 122. For example, in Figure 2A, sensor array 122 receives light reflected from the area to be imaged 132, along light path 224. The light reflected from the area to be imaged 132 passes through a sensor port area 154 that allows light to be admitted to the mouse housing 106 and continue on to the sensor array 122.

The light source may, for example, be provided by ambient light, wherein the ambient light may be generally available in the environment that the mouse is utilized in. Alternatively, ambient light may be emitted through an optional illumination window 170, as is the case for mouse 100 described in Figures 1A-1C.

Another alternative is to provide an LED illumination 172. However, unlike the mouse 100 illustrated in Figures 1A-C. Figure 2A illustrates an LED illumination 172 that is provided in a plurality of regions, here shown as LEDs at the opposite ends of the sensor array 122. Although not shown, the LED illumination may also be provided as a plurality of LEDs, each relatively small in relation to the size of the sensor unit 120, such that the plurality of LEDs are distributed around and outside the field of view of the sensor array 122. For example, the LEDs may be distributed so as to roughly form a circle or a rectangle at a similar relative height, above the surface 130, as the LED illumination 172 elements are shown in Figure 2A.

Also similar to the mouse 100 in Figures 1A-C, the mouse 100 of Figure 2 is maintained a preferred distance above the surface 130 by utilization of support feet 158 on the front, or sensor, end of the mouse 100. In a preferred alternate arrangement, Figures 2A-C illustrate a support bar 159 that replaces the support feet 158 of, for example, mouse 100 of Figures 1A-C, so that support is generally continuous along the backside, or mouse tail 102 portion, of the mouse 100 of Figure 2B. Alternatively, this support bar 159 configuration may be utilize along the left and right sides, or on the front portion of mouse 100. For example, a second support bar, not shown, that is similar to support bar 159, may replace the two front support feet 158 that are currently illustrated in Figure 2B.

Figure 2A illustrates another alternate arrangement of mouse 100. For example, instead of imaging light reflected from the surface along light path 224, the light sensor portion of the sensor unit 120 may be instead located along a front portion of the sensor unit, so as to comprise alternate sensor array 122F. Sensor array 122F preferably senses light along light path 324 that is reflected generally from in front of the mouse. Sensor array 122F may utilize illumination window 170 to allow light along light path 324 to enter the mouse housing 106, so as to reach sensor array 122F. This alternate arrangement allows for the user to view the alternate area to be imaged 132F so as to enable the user to easily move and position the imaging mouse 100.

Alternately, and preferably when utilizing light path 224 to reach sensor array 122 of Figure 2A, at least one of a real-time display on a computer display device, or an LED display device located, for example, on an upper portion of the mouse housing 106, is provided to give the user a real-time view of the area to be imaged 132. Implementation of any of these view ports, LCD view screens, or external display devices, may be similar to that as described previously for Figures 1A-C.

Also as in Figure 1A-C. the mouse 100 of Figures 2A-C comprises preferably 3 mouse buttons 140, further comprising the left, center, and right mouse buttons 146, 144 and 142, respectively. Also, mouse tail bus 102 may be utilized to send or receive X-Y location and/or video data between an external device such as a CPU and the mouse unit.

Of course, for any of the devices described in Figures 1-3, the mice 100 may alternately be, for example, battery-powered. The mice 100 may also utilize, for example, the wireless connections previously described, if desired, between the mouse 100 and an external device such as a CPU. Alternately, the mouse may provide an LED display device itself, as previously described, and also store at least a portion of the image data and/or X-Y location data for later transmission to, for example, a CPU.

Similar to the mouse 100 in Figures IA-C, the mouse 100 shown in Figures 2A- 2C, comprising the sensor unit 120, utilizes sensor array 122 to sense the area to be imaged 132, and thereby determines relative movement of the mouse 100 with respect to the surface 130. In this preferred arrangement, the mouse 100 may utilize a variety of methods, e.g., apply digital processing techniques to the sensed data, to determine this relative movement.

For example, the field of view of sensor array 122 may be more closely focused on the area to be imaged 132 so as to detect material fibers 166 (Figure 2C), such as wood fibers of a desk, or paper fibers contained in a conventional desk mat or sheet of paper. In another alternative arrangement, the sensor array 122 detects an image comprised of, for example, random or pseudo-random geometric designs 162 or other fanciful artistic designs. Of course, a completely non-random and repetitive pattern may be utilized as well. In yet another alternative arrangement the sensor array 122 detects an image comprised of, for example, some repetitive pattern or distinctively recognizable figure, such as stick people artwork 164, or a reproduction of the image of Leonardo da Vinci's Mona Lisa, that is not shown.

Essentially, the mouse 100 functions for the user in the same way a conventional mouse does, for example, providing a cursor on a computer display. Quite different, however, is that the mouse 100 senses any motion induced by the operator on the mouse 100 through the sensor array 122. The sensor array 122 and downstream software to be described below, detects the relative movement of artifacts across its field of view in any arbitrary direction within the focal length setting of the mouse.

Thus, any of these images may be utilized by the mouse 100, because the sensor array 122 detects X-Y relative motion from changes in a plurality of edges of the image. For example, the plurality of edges may be sensed as a result of relative contrasts preferably occurring throughout the area to be imaged 132. This provides the user with great discretion as to what surface and what images to use, and in fact requires no conventional mouse pad whatsoever.

Of course, a "special" mouse pad may be provided for the imager mouse to use with a specific design, such as a grid pattern upon it. However, this should not be confused with the previously described conventional special reference grid pad, that provides contrast with two wavelengths of light, one for each axis.

More importantly, the instant imager mouse 100 does not have the problems encountered with the previously described conventional special pads utilized with the IR and visible LED utilized for the first and second axes, respectively. Instead, the instant invention operates as the user may intuitively expect. In other words, even with using a special pad, the imager mouse 100 would not be required to orient the cursor movement to the x and y grids on the pad. Even if the pad were rotated, the X-Y coordinates would not necessarily change. Thus, the user may experience an intuitive movement of the cursor.

This preferred intuitive result occurs because, instead of relying on the reference grids as the conventional optical mouse does, the instant imager mouse 100 utilizes the sensor array 122 in combination with digital processing of pixel array data supplied by the sensor array 122, to detect the direction and amount of movement relative to the surface. Thus, in the instant invention, while there is no requirement for a special pad, such a special pad may be used, just as almost any surface may be used.

Further, by eliminating the track ball 112 and track ball detector 114, the problem of accumulation of dust and dirt in those mechanical assemblies is eliminated. More importantly, by utilizing the sensor array 122 as described herein, a more responsive mouse may be realizable.

For example, with a mechanical tracking device, the mouse may require some significant movement, particularly when it has become dirty or dusty, in order to cause the cursor to respond on the screen. However, in the case of the imager mouse 100 of Figures 2-3, the user may set the mouse 100 so that even very fine or very small movements of the mouse may result in significant movement of the cursor. Of course, the amount of cursor movement relative to the imager mouse 100 is preferably variable so that the user may specify that, for example, a great deal of movement of mouse 100 may be required in order to cause the cursor to move on the display. Again, this relative movement of the cursor to the movement of the imager mouse 100 is something the user may change or define according to the user's preferences, without the inherent limitations of a conventional mechanical track-ball-type mouse.

The mouse 100 may focus on fine details, for example, such as paper fibers. This may require a sensor array 122 with a relatively short field of view, or with a considerable number of pixels, or both, depending, e.g., upon the optics utilized. Alternatively, the field of view of the sensor array 122 may be enlarged, or widened, to allow the imager to detect only, for example, relatively larger features imprinted on the surface 130. However, in each case, the imager mouse 100 may function essentially the same, in that it may detect edges of the image and translate a relative movement of these edges, e.g., by signal processing, into X-Y coordinates for display as a cursor on a display device.

As shown in Figure 2A, when the mouse 100 operates to sense the area to be imaged 132F that is essentially in front of the mouse, the sensor unit 120 is preferably configured with an alternate reflector, either fixed or adjustable, that may be similar to that shown in Figure 1A. The alternate reflector, not shown, operates to ultimately direct the light that initially travels along light path 324 into a horizontal path similar to the light path 125 as shown in Figure IA. This alternate forward sensing operation preferably comprises a mouse 100 that is considered to be pointing along a horizontal axis, as previously described. Of course, this alternate forward sensing arrangement of an area to be imaged 132F may be implemented on any of the mice 100 illustrated in Figures 1-3. Also, the sensor array 122F may alternately be either fixed or adjustably mounted at an angle to best sense the area to be imaged 132F so that the alternate reflector may be omitted.

However, in the mouse 100 illustrated in Figures 2A-C, the sensory unit 120 is preferably oriented so as to be pointing along a vertical axis, i.e., the vertical axis aligned with the light path 224. In this arrangement, it is somewhat more difficult to provide the user an optical "see-through" window technique of viewing the relative alignment of the sensor array 122 over the area to be imaged 132. Instead, the sensor array 120 preferably communicates with a computer, not shown, to display an image that may be utilized to aid in the fine positioning of the mouse 100. Alternately, the sensor array 120 communicates with a display, not shown, that is on board the mouse 100 to display an image for fine positioning of the mouse 100.

As previously described, illumination is preferable for operating the instant invention as a mouse to provide a cursor on a display, particularly when practicing the invention as illustrated in Figures 2-3. The preferred embodiment of a light source other than ambient light is to utilize an LED, preferably white. A second preferable LED color is red. However, a white LED will allow the mouse 100 to function over a broader range of colors.

In any of the arrangements illustrated in Figures 1-3, the light source is preferably an array of LEDs, so as to provide more uniform lighting of the area to be imaged 132. The LED array is also preferably provided with a technique for switching the LED array on and off, the switching being preferably under the control of the sensor unit 120.

Alternatively, for example, clear or diffuse plastic parts may also be utilized to provide more illumination, allowing for a minimum number of LED light sources. Another alternative light source is to utilize laser light. Also, alternatively, a pulsed laser or strobed LED type arrangement may be utilized.

However, it will be understood that the sensor array 122 does not require collimated light. Also, while the imager preferably utilizes a focusing lens, the sensor array 122 does not require a collimating lens in order to sense the area to be imaged 132. This is a improvement over conventional optical mice.

One concern in practicing the invention arises when the mouse 100 of the embodiments of Figures 1-3 is intended to be utilized intuitively as a conventional mouse, but the mouse 100 is moved primarily along a Z axis, in this case parallel with the light path 224 as shown in Figures 2A-3C. Because the sensor unit 12 will continue to image and sense relative movement, even when the mouse 100 is lifted from the surface 130 and substantially removed from the area to be imaged 132, at least one of the following techniques may be practiced, so as to have the mouse 100 appear to function in an intuitive manner.

One technique is to provide for the mouse 100 to stop issuing X-Y position update commands whenever the mouse is lifted from the surface 130. This command stoppage may be accomplished, for example, by utilizing the above described illumination LEDs in a strobe light mode of operation. The strobe light mode allows the sensor array 122 to be exposed to at least two different light levels, for example, illuminated and ambient. The illuminated and ambient conditions correspond to the LED being on and off, respectively. The imaging sensor unit 120 located within the mouse housing 106 strobes the LED on and off, and utilizes the sensor array 122 to measure the overall light level detected from the area to be imaged 132. The sensor unit 120 compares the relative light levels observed under various conditions and utilizes the results to detect when the mouse is being lifted from the operating surface 130.

One example of the need for this shutdown of X-Y position update commands is when the mouse user wishes to move a cursor in a direction across a display that is representationally further than that allowed by the physical desktop space available to the user for moving the mouse 100. If the X-Y position update commands are suppressed or stopped when the mouse 100 is not in contact with surface 130, then the mouse 100 will function intuitively when the user, e.g., lifts, repositions, and then again engages the surface 130 with the mouse 100 in order to complete a movement of the cursor to the desired position on the display.

In practicing the strobe light technique, some alternate methods and conditions that indicate to the sensor unit 120 that the mouse 100 is in contact with the surface 130 may include the following.

For example, when the sensor unit 120 detects changes in overall light level that are synchronized with the LED switching, or turning On and Off, the sensor unit 120 may determine that the mouse 100 is receiving light that is reflected back into the sensor array 122 from the mouse surface that has originated from the LEDs. This condition may be interpreted as a "mouse down" condition or mode, i.e., the mouse 100 is in contact with the surface 130.

Alternatively, a condition that indicates that the mouse 100 is not in contact with the surface 130, i.e., a "mouse lifted" condition or mode, may include the following.

When the overall light level received by the sensor array 122 does not change significantly in response to the strobing of the LEDs, or e.g., does not appear to be sufficiently synchronized with the LEDs, then the sensor unit 120 may determine that there is not a significant amount of light being reflected back into the imager or LED array. If the sensor 5 unit 120 determines that one of these conditions has occurred, the sensor unit 120 will shut down the mouse cursor signal until such time as the sensor unit 120 determines that the light is sufficiently synchronized, or is sufficiently changing, so as to indicate the mouse is in a reasonable proximity to a surface 130, so as to start or resume providing X-Y position update commands.

When the mouse 100 is removed from the surface 130, the observed light level will depend much more on the ambient light level than on the amount of light emitted from the LED array, as long as the mouse is far enough from a diffuse reflecting surface, or is not optically aligned with a mirror-like surface. However, this method may have some operational concerns when used on an exceptionally shiny or reflective surface such as glass or metal.

In order to strobe the LEDs, for example, a simple algorithm may be utilized that may provide two light levels, the first comprising all LEDs switched "On" and the second level comprising all LEDs switched "Off. " Alternatively, mouse 100 may generate multiple levels of light by selectively activating groups of LEDs. The mouse 100 may then determine, e.g. by utilizing software, whether to turn all of the LEDs off, or only a portion of them, depending upon the primary use anticipated, or designated, by the user.

Another alternative for stopping the issuing of X-Y position update commands by the mouse 100 comprises utilizing a processor, to be described in detail later with Figure 6. The processor preferably comprises a portion of the sensor unit 120, but may also be hosted, e.g., in a CPU, that is not shown. The processor may essentially interprets, or "sees," the area to be imaged 132 generally going out of focus when the mouse 100 is lifted from the surface 130. A combination of software and/or hardware may be utilized with the processor, or sensor unit 120, that would utilize a threshold limit of focus, or relative distance from the area to be imaged 132. as desired by the user. For example, upon reaching or exceeding the threshold limit of focus, the processor, or sensor unit 120, would stop the issuing of X-Y position update commands by the mouse 100, even though the mouse may continue to sense or scan, utilizing the sensor array 122. However, the issuing of update commands would not continue until the processor, or sensor unit 120, determined that the mouse was again within a suitable distance of an object or surface so as to be within the threshold limit of focus.

Yet another technique for stopping the X-Y position update commands by the mouse 100 comprises a mechanical sensor, e.g., a microswitch, not shown, that is mounted to the portion of the mouse housing 106 that may be adjacent to the surface 130 illustrated in Figures 2-3. The microswitch, or a plurality of microswitches, may be integrated with the support feet 158 and/or the support bar 159. By utilizing a microswitch technique, any concerns of a shiny or reflective desktop of metal or glass may be alleviated.

Yet other alternate arrangements, as described below, that may desire to control the issuing of X-Y position update commands include portable processing devices such as, for example, a portable or pen based computer, or a PDA device. In these portable devices, a thumb, finger, or hand operated microswitch-like" device may be implemented to control the issuing of X-Y position update commands. In these portable devices, the imager may be oriented, for example, so as to point "up" at the user. In one example, a finger may depress a microswitch, or a pressure pad functioning as a microswitch-like device, so as to enable the output of update commands. Other various similar arrangements may also be implemented.

Other arrangements for controlling the issuing of X-Y position update commands in these portable processing devices may utilize various arrangements of the LED illumination for Z-axis sensing described herein. Also, for example, another technique may utilize IR LEDs in the portable data processor configurations in order to check for the close presence of an object, e.g., a finger or a bar code. One reason for utilizing the IR LEDs in either of the portable data processors, or even in the previously described desktop mouse configurations, is to reduce subjecting the user to a potentially annoying source of flicker. Another advantage of utilizing the IR LEDs may be realized because silicon imagers, including some of the examples described herein, may be relatively quite sensitive in the IR portion of the spectrum.

Also, a relatively low duty cycle may be utilized with the LEDs in order to minimize battery drain on a portable device. These alternate IR arrangements may also be understood to be similar to a "wake-up" type circuit or device with a pulsed IR emitter.

Of course, for any of these alternate arrangements, it is understood that only a subset of the imaging array may need to be processed for a light level response to the LED flickering or pulsed IR emitter. Further, this reduced image size may result in a reduced data load, that may then result in faster sample rates. Alternately, this reduced image size may result in less power consumed in sensing, or "looking," for an object to move relative to, or approach, the imager, e.g., a finger or a bar code. This less power consumed arrangement may be particularly desirable for a battery-powered and/or handheld device.

Further, another alternative arrangement provides for combining the strobe light technique with the microswitch technique to allow the sensor unit to have inputs from both techniques, in order to make decisions as to when to start or stop the X-Y position update commands.

Yet another alternative is to provide a sensing material or sensor pad, e.g., as a portion of at least one support foot 158 and/or support bar 159, where the sensing pad is similar to a conventional touch pad on a laptop computer. Whenever physical pressure is applied to the pad, a signal may be provided to the sensory unit 120 that indicates that the mouse is in the "mouse down" mode. Also, when the pad does not sense adequate pressure, the signal may be changed so that the sensor unit may put the mouse into the "mouse lifted" mode and thus stop the provision of X-Y position update commands. Of course, any or all of the above methods for Z axis movement detection, e.g., the microswitch, pressure pad, processor interpretation, laser pulse, or LED strobing, may be combined as desired to allow the mouse 100 to intuitively operate.

It will be understood to one skilled in the art that any of the above sensors, e.g., microswitches or sensor pads, are not actually determining any X-Y movement. They are only involved in the determination of a Z movement. Thus, the mice 100 of Figures 2-3 do not need to rely upon any mechanical parts to determine a relative X-Y movement.

As shown in Figure 2A-C, the mouse internal bus 104 is preferably utilized to provide the communication between, for example, the strobe LEDs 172 and the sensor unit 120, as well as to provide a communication link to the external display device via the mouse tail bus 102. Also, any signals or communication required between any sensors, e.g., microswitches in the support feet 158 or support bar 159, may also be provided with connections to the mouse internal bus 104, although these additional connections are not shown in Figures 2A-C.

In summary, the mouse 100 and any of its alternatives, as illustrated in Figures 2A-C, comprise an imaging mouse that may be utilized for cursor positioning on a computerized display.

Figures 3A-C illustrate a code reading and mouse device 100 resulting from the practice of another embodiment of this invention. Figure 3A illustrates a side view of the mouse 100, and Figure 3B illustrates a top view of the mouse 100 illustrated in Figure 3A. Figure 3C illustrate a cross-sectional top view of the mouse 100, wherein the section is taken along the line 3C-3C in Figure 3A.

Figures 3A-C illustrates a computer mouse 100 that preferably incorporates essentially all of the functions of the imaging mouse 100 of Figures 2A-C, and, in addition, the sensor array recognition of preprinted symbols as described in Figures lA-C. The mouse 100 of Figures 3A-C preferably comprises a single sensor unit 120 utilizing a single sensor array 122 to perform the imaging that is performed for both the mouse translational movement determination and the symbol imaging that includes bar code scanning.

As in Figures 2A-C, the sensor unit 122 of Figures 3A-C is essentially comprised of the same components, and preferably utilizes a technique of pointing along a vertical axis as previously described with Figures 2A-C. Of course, the alternative support bar 159 illustrated in Figures 2A-C may be utilized instead of the support feet 158 of Figures 3A-C, if desired.

In another arrangement, a skirt 407, as shown in Figures 3A-B, is provided around the perimeter of the housing base portion 406 of mouse 100. For example, the skirt may comprise a curtain-like wall, protrusion, or flap. The skirt 407 may be implemented around the perimeter of any of the mice 100 of Figures 1-3. The skirt may be comprised of a relatively firm skirt portion 507, and a relatively flexible skirt portion 607. The relatively firm skirt portion 507 may be comprised, e.g., of plastic similar in firmness to a plastic that may be utilized in the construction of the housing 106. The relatively flexible skirt portion 607 may be comprised, e.g. of flexible rubber, a relatively flexible plastic, a flexible sponge-like material, or cloth.

The relatively firm skirt portion 507 is closest, and attached, to the housing base portion 406. The flexible skirt portion 607 is attached to the firm skirt portion 507. The flexible skirt portion 607 preferably continues a physical extension to the surface 130, that is initiated from the housing base portion 406 by the firm skirt portion 507.

The firm and flexible skirt portions cooperate to extend from the housing base portion 406 to the surface 130, in order to provide a more controlled light environment for the sensor unit 122. A more controlled light environment is provided because the skirt 407 preferably blocks either a portion or substantially most, if not all, of the ambient light from entering the area to be imaged 132. This allows, e.g., the LEDs to provide a more controlled lighting condition of the area to be imaged 132.

As shown in Figure 3C, the sensor unit 120 utilizes the sensor array 122 to sense an area to be imaged 132 that may comprise any or all of the following.

The area to be imaged 132 may comprise, for example, the previously described random or pseudo-random geometric configurations or fanciful artistic designs 162, the artwork 164, or the material fibers 166.

The area to be imaged 132 also may comprise machine decodable symbols, such as a "one-dimensional" symbol 160, e.g., a bar code, or a "two-dimensional" symbol 161. The two-dimensional symbol 161, for example, may be a pre-printed matrix for digital sensing and interpretation, or any other machine decodable symbol. Also, the area to be imaged 132 may comprise graphics and text 168. The sensor unit 120 and/or a computer device that is not shown, may optionally perform optical character recognition ("OCR") on the graphic or text image 168.

In imaging the machine decodable symbols, another arrangement of the mouse 100 includes the sensor unit 120 capable of "self-learning. " The sensor unit 120 retains its experience about the machine decodable symbols, or alternately has, e.g., a library of all, or at least the most likely, symbols and their formats so that the sensor unit 120 may assist the user by making an "educated guess " as to which symbol it is likely sensing. This helps improve performance over time and also may be applied to interpretation of X-Y movement across the surface 130.

For example, self-learning of the image pattern, or design, that serves as a regular surface 130 that the mouse 100 is moved upon, may be learned and retained, along with other repetitively used surfaces. This self-learning may assist the sensor unit 120, e.g., in the determination or the comparison of the edges detected with its memory of edges previously encountered for that surface, so that the sensor unit 120 may more accurately, or easily, determine its X-Y location and relative movement.

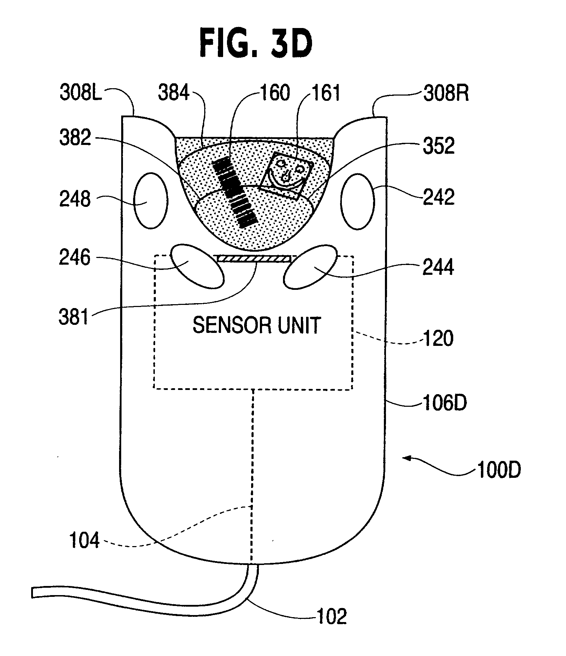

The imaging mice 100, as illustrated in each of the Figures 1A-3C, preferably utilize a single non-adjustable lens. For example, the lens may be formed adjacent to and upon the sensor array 122 itself, or may be located separate thereto. However, an adjustable lens arrangement may be utilized as is illustrated in Figures 3D and 5A-B.

Figure 3D illustrates yet another embodiment of the computer imaging mouse 100D resulting from the practice of this invention. As in Figures 3A-C, the imaging mouse 100D may use its imaging capabilities to provide X-Y relative movement, and capture printed indicia such as machine decodable symbols.

In Figure 3D, imaging mouse 100D comprises a mouse housing 106D that contains a sensor unit 120. Except as follows, the mouse 100D is generally similar to the mice 100 as described in Figures 1A-3C.

In Figure 3D, the mouse housing 106D comprises a first mouse input device 242, a second mouse input device 244, a third mouse input 246, and a fourth mouse input device 248. The mouse input devices 242, 244, 246, and 248 may comprise electrical switches, or mouse buttons, or alternatively may comprise, e.g., pressure sensitive areas.

The mouse input devices 242, 244, 246, and 248 transmit a signal to the sensor Unit 120 along the mouse bus 104. If transmission external to the mouse 100D is desired, the mouse signals may be transmitted, as previously described in Figures 1A-3C, along mouse tail bus 102, or alternatively by wireless connection.

The sensor unit 120 utilizes a technique, as previously described, of pointing along a horizontal axis, or alternatively, a modified pointing along a horizontal axis. Thus, the sensor array may receive light directly from the area to be imaged that is located essentially below the viewport area 352 of Figure 3D.

The area to be imaged, that is generally located underneath the view-port area 352, is also generally defined by a left front arm 308L and a right front arm 308R, wherein both arms form a portion of mouse housing 106D. These arms serve as a visual guide to the user to position the mouse appropriately over a code or symbol for imaging thereof. As such, these arm guides serve a similar function as the view port area 152 of Figure 1A.

As in the mice 106 of Figures 1 and 3, the mouse 100D of Figure 3D is capable of imaging captured printed indicia such as machine decodable symbols, for example, a one-dimensional bar code 160 and a two-dimensional symbol 161, as shown in Figure 3D.

Unlike the mice 100 of Figures 1A-3C, mouse 100D as shown in Figure 3D, may utilize four mouse burtons. This is to allow an assignment of one of the buttons as a mouse trigger control. One example of this mouse trigger control is to utilize it as a " mode control button." This mode control button may enable a user to switch the imaging mouse 100D among its various modes of operation. Any of the four mouse input devices 242, 244, 246, or 248 may be designated by the user as a default mode control button. It is preferable that the user be able to specify which mouse input device the user desires to use, and may be based upon, e.g., the users convenience, or ergonomic satisfaction.

For example, depressing the designated trigger button once may switch mouse 100D from a "mouse mode" to a "code reader mode. " Depressing the designated trigger button again may switch the mouse 100D from the "code reader mode" to a "scanner mode," and depressing it yet again may bring the mode back to the initial "mouse mode," Another example of a mode is a "video camera mode."

The "mouse made," the "code reader mode," "and the "scanner mode," operate similar to those techniques described for Figures 1A-3C above. For example, in mouse mode, the mouse 106D operates to provide an X-Y relative movement of the mouse over a surface, providing a signal that may be utilized as a cursor on a display unit of a computer. The code reader mode allows the mouse 100D to image and capture any printed symbol, for example, machine decodable symbols such as one-dimensional and two-dimensional codes. The scanner mode allows the mouse 100D to be utilized, for example, as a graphic or text scanner.

In "video camera mode," the mouse 100D may be utilized similar to a video camera for videoconferencing, while utilizing a computer device, not shown. The "video camera mode" utilizes the mouse essentially as a video camera, where the user may utilize it either for videoconferencing or for capturing images, other than that of the surface 130. For the video camera mode, although not shown in Figure 3D, a separate stand or tripod may be provided to support the mouse. For example, a tripod may be utilized on a computer display device, or anywhere the user desires, so that the pointing of the sensor array may be physically stabilized for a videoconference.

Alternately, another arrangement of the mouse 100D, although not shown in Figure 3D, comprises two legs that may be either folded up into the mouse housing 106D or extended away from mouse housing 106D, wherein a first leg may be adjacent the left front arm 308L and a second leg may be adjacent the right front arm 308R. The extendable legs are preferably mechanically adjustable so that the two extended legs, combined with the mouse housing 106D, would comprise a tripod-type device that may be suitably positioned by the user for use as either a stationery video camera or videoconference device.

In another arrangement of mouse 100D, the mouse housing 106D comprises a housing that is hinged so that it may be folded or unfolded. Although not shown, the hinged mouse may be suitably adapted to setting upon a monitor or laptop computer to provide stability, without the need, for example, to require a tripod-type extendable legs or an independent tripod-like stand.

Further, although not shown, audio input to the mouse, for example, a microphone, may be input to the mouse housing 106D to provide an entire audio-video conference system, in cooperation with a computer connected to a suitable visual monitor and speaker system , Of course, an "audio mode" may be added as another setting to be triggered by the designated trigger mouse input device of Figure 3D.

While all four mouse input devices 242, 244, 246, or 248 are shown on the top surface of housing 106D, any one or all of the mouse input devices 242, 244, 246, or 248 may be located on the sides, or any other portion, of the mouse housing 106 that is preferred by the user.

Another alternate use of the additional mouse input device is to enable the user to trigger the mouse device 106D to "snap," i.e., to trigger or initiate the capture of an image. Yet another use of the additional mouse input device is to adjust a "zoom mode" of the field of view of the imager mouse 100D, preferably by utilizing the variable focus lens assembly 180 described herein.

Further, in the scanner mode, the sensor unit 120 is capable of incrementally reading printed symbols extending beyond the immediate field of view of the imager mouse view port area 352. For example, a lengthy bar code symbol, portions of a two-dimensional symbol, or a sequence of human readable text characters, may be scanned using this mode. As the imaging mouse is moved across the surface, images may be captured in real time, then passed through the sensor unit 120, and made capable of fitting into an electronic representation of the scanned image. For example, the electronic representation of the scanned image may be accomplished utilizing directional and displacement cues from the mouse, i.e., mouse mode function X-Y relative movement data, or form embedded codes in small sub-portions of a symbol. Either the relative position data of each portion, or the embedded codes, or both, may be utilized to scan in and assemble the entire image for further processing.

Alternately, the imager mouse 100D of Figure 3D may be implemented so that it is self-triggering." For example, the mouse sensor unit 120 may continue to monitor the image data provided by the sensor array 122 as the mouse 100D is moved about. When the sensor unit 120 realizes that at least a portion of the sense data comprises, for example, a machine-decodable symbol, then the sensor unit self-triggers to go into the code reader mode. Also, the imaging mouse 100D may continue to sense the area to be imaged and continue to provide, for example, data resulting from operation in mouse mode simultaneously with data resulting from the code reader mode. In another arrangement, a time-sharing technique is practiced, wherein the sensor unit 120 alternately performs, e.g., the code reading mode and the mouse mode, and alternates between these modes at a rate sufficient to be imperceptible to the user, such that the user believes that both modes are operating simultaneously. Of course, the same digital image data may be stored, and then re-processed as many time as desired, to obtain results for any and all modes desired by the user, e.g., for approximately real time results.

In yet another arrangement, the self-triggering capability may be utilized to provide an automatic focus, or field of view, adjustment by the mouse 100D, rather than requiring an input from the user.

In video camera mode, the mouse 100D is utilized with a variable focus lens assembly 180 that is also depicted in Figures 5A-B.

The variable focus lens assembly 180 is preferably implemented with mouse 100D, as shown in Figure 3D. A lens adjustment wheel 381 is provided for manual adjustment by the user on mouse 100D. The lens adjustment wheel 381 comprises a portion of the variable focus lens assembly 180. The mouse housing 106D is adapted to allow a portion of lens adjustment wheel 381 to extend outside the housing 106D. Although not shown in Figure 3D, the variable focus lens assembly 180 is situated between the sensor unit 120 and the area to be imaged. The variable focus lens assembly 180 preferably also includes the sensor array 122. However, if desired, the lens assembly 180 and the sensor array 122 may be physically separate.

This preferred arrangement of the variable focus lens assembly 180 is described in detail with Figures 5A-B.

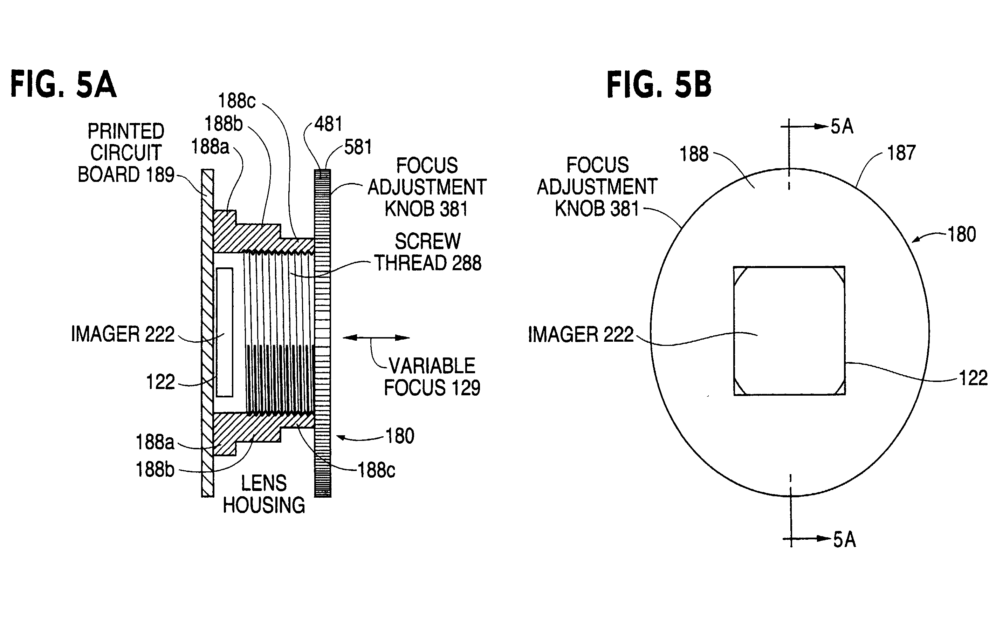

Figures 5A-B illustrate a preferred variable focused lens assembly in the *practice* of the instant invention. Figure 5A illustrates a cross-sectional side view taken along line 5A-5A of Figure 5B. Figure 5B illustrates a front view of the variable focused lens assembly.

In Figure 5A, the variable focused lens assembly device 180 is comprised of a variable focus adjustment wheel 381, a lens housing 188, and a printed circuit board 189. Preferably, the variable focused lens assembly 180 houses the sensor array 122, where the light sensing side 222 of the sensor array 122 is positioned nearest the focus adjustment wheel 381.

The lens housing 188 further comprises a first housing portion 188a, a second housing portion 188b, and a third housing portion 188c. These portions allow the lens housing 180 to be collapsed or extended along the variable focus path 129. The focus adjustment wheel 381 comprises a plurality of raised portions 481 and depressed portions 581, so as to allow the user to frictionally rotate the focus adjustment wheel 381, thereby moving a lens 187 either closer to or further away from the sensor array 122 along the variable focus path 129. The variable focus lens assembly 180 may be utilized when integrated with, for example, a mouse 100D Figure 3D, to provide the user with an adjustable field of view or focus range. This allows the user to alternate between, for example, the imaging of material fibers, to the imaging of larger two-dimensional machine decodable symbols, to imaging as a video camera.

As shown in Figure 3D, by utilizing the variable focus lens assembly 180, the user may be provided preferably with a first-range line 382 and a second range line 384. These range lines may indicate to the user preferable focus adjustments based upon pre-set markings on the focus adjustment wheel 381, respectively. Thus, the user may dial a focus adjustment and have a visual representation of the area that the sensor array 122 is able to image. For example, if set at the first range setting 382, the user may image anything within the boundaries between the range line 382 and the sensor unit 120. If a longer focal length is desired, the user will set the focus adjustment wheel 381 to a setting that corresponds to the second range line 384. Obviously, other ranges may be practiced with this invention.

Range indications may also be displayed on an LCD display on the mouse, or on a computer display device, where a graphical representation of the approximate range may be represented to the user. This display may include, for example, the above described reference line boundaries together with the image output,. The display may also include an image of a conference room with a maximum allowable distance away from the mouse in order to be included in the videoconference. The display may also indicate when the lens is at an infinity setting.

Another alternative arrangement of the variable focus lens assembly 180, that is not shown, is to provide a plurality of lenses on a modified focus lens assembly. This alternate assembly would comprise a plurality of lenses that may be rotated into the variable focus path 129, so that the user may select a variety of fixed focal length lenses, depending upon the mode the user desires. This alternate arrangement may be referred to as a "dial-a-lens" assembly.

Both the dial-a-lens and the variable focus lens assembly 180 may alternatively be automatically adjusted and positioned, e.g., by an electric motor device, that is preferably miniaturized. The lens adjustment and positioning may be triggered by a mode selection by either the user or the CPU.

The variable focus lens assembly 180 and the lens 187 may be used with, for example, a CMOS array that has a lens already formed as a portion of the array itself, thereby utilizing lens 187 as a secondary lens for adjusting the focal length. Also, the CMOS array may be provided without a lens, such that the lens 187 is the sole optical lens of the mouse. Alternatively, a plurality of lenses, not shown, may be provided in place of the single lens 187 illustrated in Figures 5A-B.

A preferred implementation of the variable focus lens assembly 180 is to have the lens 187 and sensor array 122 arranged such that approximately a 1/3 to 1/2 rotation of the focus adjustment wheel 381 is adequate to change the focal length. A focal length adjustment example is from approximately 0.2" to 2.0, " and with further rotation may be set to infinity.

As will be seen from the specifications of the examples of sensor arrays described below in Figure 6, a 640x480 VGA may be utilized in the practice of the instant invention. However other arrays may be appropriate as the preferences of the user are considered.

A variety of lenses may be selected depending upon the primary field of view desired by the user. Both the focal length and the F-stop of the lens, or lens assembly, that is selected may allow for variations in performance for the user.

For example, a "short" lens may be utilized for imaging in the range of approximately 0.05 inches to 0.20 inches, where the imager mouse is primarily looking down at a surface, for example, to image material fibers. Alternatively, a "medium" lens with a field of view of approximately 0.20 inches to 4 inches may be utilized when the imager is primarily sensing bar codes and the like. Also, a "long" lens with field of view of approximately 6 inches to 24 inches may be preferred when the imager mouse is primarily used as a video conferencing camera.

Of course, these various fields of view may be implemented in one mouse system by utilizing, for example, the variable focus lens assembly illustrated in Figures 5A-B. This variable focus lens assembly comprises an equivalent of the short, medium and long lenses. Also, other alternatives, including the dial-a-lens assembly previously described, may be utilized to provide an equivalent of all, or portions, of the short, medium and long lenses, as desired.

In one arrangement in the practice of the instant invention, a typical field of view of around 0.7 inches square may be preferred. Alternatively, another arrangement in the practice of the instant invention utilizes a preferred field of view of approximately 1 to 1.5 inches. In yet another arrangement, the area of interest is kept further away from the imager, but the invention utilizes the same optics as in the approximately 0.7 inch square field of view arrangement. Each of these arrangements may be provided with an adjustable or fixed lens, that may result in a system that is able to resolve approximately a minimum of ten mil features, depending upon the imager chosen.

The preceding paragraph describes an arrangement of a useful field of view when reading optical codes with 10 mil features. However, one "rule of thumb" for determining the size of the field of view is to have at least 1.5 pixels per minimum element in the optical code. So, for example, the 640 by 480 pixel imager described herein may have a relatively large field of view, for code reading, of up to, e.g., about 4.3 by 3.2 inches, when reading 10 mil codes. However, this field of view may be diminished if the imager is not operating under approximately ideal circumstances, such as low noise, minimal motion blur, and the like. Because such a relatively large field of view is not always desired or practical, particularly when in contact with the surface, a smaller imager may be used, and/or the optical magnification may be changed so that finer codes may be more easily read. For example, the user may wish to resolve a minimum of approximately 7 mil features instead of about 10 mil features.

As to motion blur, the approximate maximum allowable exposure time setting, or alternately, the approximate maximum illumination strobe duration setting, may be based upon, or relationally calibrated, to the expected, e.g., approximate maximum velocity of the mouse. For example, if the expected approximate maximum velocity of the mouse is, e.g., 50 inches per second, then an approximate maximum exposure time may be set at, e.g., approximately 100 microseconds. These maximum settings may be desired to limit the relative motion to an approximate maximum motion, e.g., of approximately 5 mils during the image integration time, based upon an example similar to the feature resolution examples described above. Of course, other alternate limits may be set, depending upon, e.g., the feature resolution desired, and/or the sensor array utilized.

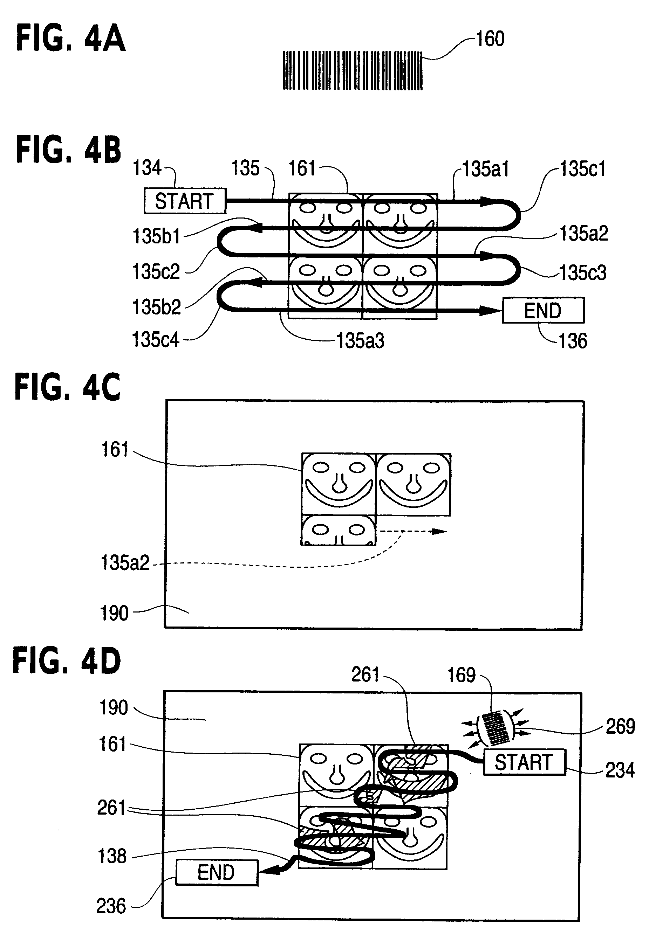

Figures 4A-D illustrates both some examples of machine decodable symbols and of some alternative methods of capture of a machine decodable symbol. Figure 4A illustrates an example of a conventional one-dimensional bar code. Figures 4B-D illustrate some alternate techniques for capturing a two-dimensional machine decodable symbol.

A more detailed description of one-dimensional bar codes, e.g., as illustrated in Figure 4A, and some alternate signal processing techniques for recognition of one-dimensional barcodes, are more filly described in U.S. Patent No. 5,446,271, to Cherry, et. al., and is incorporated by reference as though fully set forth herein.

Some other techniques for signal possessing of machine decodable symbols are more fully described in U.S. Patent Nos. 5,825,006 to Longacre, Jr., et. al., 5,513,264 to Wang, et al., and 5,296,690 to Chandler, et. al., and all three of these patents are incorporated by reference as though fully set forth herein.

As shown in Figure 2B, the two-dimensional symbol 161 may be imaged or scanned in its entirety if its size falls within the focal length of the mouse 100. However, if the machine decodable symbol is either larger than the focal length, or difficult to capture in its entirety, or alternatively, if only a portion of the symbol is initially encountered by the imaging mouse, then a technique such as is illustrated in Figure 4B may be utilized.

For example, the user begins imaging the symbol at the start position 134, and then the user moves the imaging mouse along the approximate imaging path 135. In a preferred operation, the user moves the imaging mouse across the symbol, first traveling on a first imaging path 135a1, then reversing direction at a first imaging path directional change 135c1, and continuing therefrom on a second portion of the imaging path 135b1. The user again reverses direction at a second imaging path directional change 135c2, so as to travel along a third portion of the imaging path 135a2. The user again changes direction at a third imaging path directional change point 135c3, so as to travel along a fourth portion of the imaging path 135b2, where again the user changes direction at a fourth imaging path directional change 135c4, so as to continue along a fifth portion of the imaging path 135a3. The user may continue in this manner for as many times as required so as to image the entire machine decodable symbol. Upon completion of the plurality of portions of imaging paths, the user would arrive at an end position 136.

Figure 4C illustrates a display device 190, that may be located, for example, on the imaging mouse itself, or as a part of a computer display device that may be utilized with the imaging mouse. A dashed line illustrates the real-time location of the mouse along a portion of the imaging path, in this case the third portion of the imaging path 135a2. As the user moves the mouse along path 135a2, preferably the user is able to view on the display device 190, and preferably in real time, the machine-decodable symbol 161 as it is constructed, i.e., as it is sensed and imaged by the imaging mouse.

Alternatively, the user may choose not to follow an "orderly" path such as the imaging path 135 illustrated in Figure 4B. Instead, the user may choose to follow a less orderly path, for example, similar to the path 138 illustrated in Figure 4D.

There are at least two reasons why the user may wish to follow a less orderly path. First, the user may find it more convenient not to follow quite such an orderly path for ergonomic reasons.

Second, and as illustrated in Figure 4D, the user may or may not have attempted to follow an orderly path, but was not able to capture the entire machine decodable symbol 161. For example, the user may have found that certain "void" areas 261 resulted. But the user preferably desires to complete the two-dimensional symbol 161 so that the voids 261 are substantially eliminated.

One technique to reduce or eliminate the voids 261 is to utilize a "paintbrush" or "reverse erasing" technique. A paint function, or "paint mode" is enabled or triggered. The paint mode may be triggered either automatically or through a user input, for example, utilizing one of the mouse input devices of Figure 3D to trigger the reverse erasing function 169.

The user positions the mouse appropriately on the work surface either near, or upon, the two-dimensional symbol 161. The user may, e.g., manually trigger that the user is at a preset start position 234. The start position 234 is preferably indicated on a display, to help guide the user. Alternatively, the processor, e.g., utilizing software, may determine that the symbol is within imaging range again, and update the cursor based upon, e.g., a partially recognized portion of the symbol with the voids.

Then, e.g., by either a user trigger input, or by a self-triggering operation, the cursor is placed into a reverse erasing symbol 169 configuration. The relative representational oscillating, or back and forth "erasing movement" is represented by the motion arrows 269. The cursor movement represented on the display device 190 is relative to the movement by the user of the imaging mouse on the surface area to be imaged, where the actual two-dimensional symbol 161 is located. Then, from near the start position 234, the user essentially utilizes the imager mouse similar to an eraser on a chalkboard, where the user attempts to move the cursor represented by the reverse eraser 169, and the motion arrows 269, over the void areas 261 so as to complete the two-dimensional symbol image 161. At some point, the user is able to complete the reverse erasing procedure and arrives at the end position 236 as shown in Figure 40.

In another arrangement the void areas 261 are preferably represented by one or more contrasting colors, with respect to the color or colors representing the portion of the 2D symbol 161 that previously has been captured properly. In another alternative, e.g., a gray scale contrast, or differing patterns, may be utilized to provide the visual differentiation between the void areas 261 and the properly scanned areas of the 2D symbol 161.

The display 190 may comprise one of a number of alternatives. For example, the display may be a type of "thumbnail" sketch. The thumbnail sketch may provide adequate information for the user to discern that the symbol has been recognized and captured by the system, without unduly taxing either the sensor unit, or the processing unit that will be described later. Alternatively, either a graphics display window, or the entire display, may be utilized with a high resolution, particularly when the reverse erasing function is in progress. Another alternative is to provide an audio signal of either voice synthesis or of a recognizable tone or sound that indicates to the user whether a symbol has been captured properly or needs further work, for example, a symbol needing the reverse erasing function.

Another alternative is to provide a library of symbols, as previously described for the self-learning technique. The sensor unit 120 may utilize the library of symbols to interpolate, suggest, or even "guess" at symbols, once at least a portion of the symbol has been imaged. In this case, the reverse erasing or painting function may only need to be partially used, until the sensor unit determines that it has enough data to recognize the symbol accurately. Alternatively, the display device may display a list for the user to choose from.

Also, as previously described for the direct symbol recognition, a self-learning type of implementation is possible in recognizing machine-decodable symbols in conjunction with the reverse erasing or painting function. The sensor unit 120 may also utilize a self-learning function together with the painting function for text recognition.

Also, a linear CCD may be utilized in an alternate assembly technique. For example, a line by line assembly may be performed with this linear sensor.

A lookup table, as previously described, may also be utilized to provide an estimate of the scale of the bar code to be scanned, and may be combined with a partial scan of the symbol.

Although one-dimensional and two-dimensional code symbols have been used in the illustrations in Figures 4A-D, any code symbols or other graphical images may be imaged with the above-described capture and reverse erasing functions. For example, a maxi-code that has a "bull's eye" in the middle of the code may be utilized.

Of course, either the thumbnail sketch or full resolution display of the two-dimensional symbol, for example, may be activated automatically by the sensor unit, as opposed to requiring a user input from a mouse input device.

And, for example, a code symbol may be utilized for data entry or as part of a reference lookup table to provide significant data availability to the user in conjunction with utilizing the imaging mouse.

An example of a device utilized in the application of a library or look-up tables, for easier recognition or assembly of an image, or selection or "guessing" by the processor, or the user via a display, includes the LogiCORE One Dimensional RAM-Based Correlator by XILINX, Inc., San Jose, CA, for one-dimensional symbols. A Two Dimensional RAM-Based Correlator is also available from XILINX, Inc., for two-dimensional symbols.

Further, e.g., a two-dimensional symbol may be previously encoded with re-assembly instructions or embedded codes located throughout the symbol. For example, the symbol may be divided up into sectors, e.g., 16. Each sector may comprise a predefined area, or portion, including a predefined boundary of the sector portion of the symbol, and the embedded code data may be utilized for pattern matching or correlation. The unique assembly instruction data embedded in the symbol would allow a processor to determine which portion of the symbol that the sensed portion belonged to. This would also allow for a more accurate re-assembly, and a check for correctness. Also, the symbol may be pre-divided, e.g., corresponding to the embedded assembly reference codes. If only a portion were sensed during any one scan, then only the portion that included the symbol's predetermined sector boundaries need be retained for assembly with the other portions to be scanned in the next scanning pass. This may also reduce the processor overhead required in an assembly process of a partially scanned symbol, particularly when combined with a look-up table technique.

Re-assembly instructions or embedded codes located in the symbol may also be understood from, for example, the row numbers and codeword clusters utilized in PDF417 symbols, or the internal data regions and finder patterns utilized in DataMatrix ECC200 symbols.

The auto-matching described above may be performed with the image processor FPGA and Correlator, described above, and an increased memory. However, for a complete self-learning technique, such as storing and utilizing the features of a surface repetitively encountered, and for improved recognition of a surface, e.g., when the invention is utilized in a self-learning mouse mode, then a full microprocessor may be utilized.

It is understood by one skilled in the art that the imager mouse, by having an X-Y relative movement function, i.e. the mouse mode, may construct, e.g., a two-dimensional symbol 161 as illustrated in Figures 4B-D in an accurate manner. This accurate construction is facilitated because the X-Y coordinates of each portion of the symbol may also be gathered as the imager is passed over the symbol in the code reading mode or in the paint mode.

In an alternate arrangement, utilizing a CMOS array, the mouse and code reader, or mouse and paint modes, for example, appear to be active essentially at the same time. The invention may gather a data set at a rate of approximately between one and 30 times per second. The digital data for this CMOS array arrangement, or for the CCD arrangement described herein, may be stored and reprocessed as may times as desired, so that the same data may provide results for anything between one and all of the modes available. Thus, the various modes may be made to appear to be running simultaneously to the user.

In another arrangement, two linear high speed CCD imagers and a relatively fast processor are utilized, so that about 1000 to 2000 scan lines per second may be realized. These scan lines may be analyzed, e.g., in a mouse mode, or assembled into an image, e.g., to recognize a two-dimensional symbol. Also, this CCD arrangement may be provided in a "crosshair" type configuration.

For example, an alternate cross-hair design of a CMOS sensor array may actually improve imaging for relative motion yet require less actual processing throughput. Also, the image data of the area to be imaged may be utilized similar to a fax machine output where the representative image is assembled, for example, line by line and only after it is assembled does the processor act to recognize a machine decodable symbol.

Figure 6 illustrates a system block diagram of an imager mouse that utilizes a USB type controller. The elements comprising Figure 6 illustrate an arrangement of the imager mouse 100 as illustrated in Figures 2A-3C.

Generally, Figure 6 illustrates a CMOS sensor array 122 that provides image data to an image processor 191. The CMOS sensor array 122 may also provide data to a USB controller 194. The image processor 191 utilizes a memory device 192. The image processor 191 may also provide data to the USB controller 194. USB controller 194 controls the data flow between either the array 122 and processor 191, and at least one of a CPU 198, an IRDA type connection 196, a display device, and any mouse input devices.

In another arrangement, the mouse electronics may comprise a controller of some sort, e.g., a USB controller, or some other controller, or an additional controller for image processing power. The electronics may also comprise a memory device, e.g., a FLASH, RAM, or ROM type memory device, that may also, e.g., run the controller code. Further, the electronics may also comprise a logic device, e.g., a microprocessor, or some other related or similar logic technology, an array sensor, and an output device . Alternately, one or more of these electronics may be "inside" or integrated with the controller.

Figure 6 illustrates an image processor 191 performing either a partial processing, or a complete processing by including, e.g., a video driver, of the data signal provided from the CMOS sensor array 122. The user choice of providing either partial processing or complete processing by the image processor 191 depends at least in part upon both the type of processor implemented and how the user desires to utilize the processor 191. Then, either the partially processed, or completely processed, data signal is transmitted to the CPU 198 for either final processing, or for utilization, respectively, via the USB controller 194.

Thus, the complete interpretation of data, for example, in the form of decoding a one or two dimensional barcode, or the interpretation of text such as performing OCR on the scanned text, and any other various data processing related to utilizing the instant invention, may be completely performed onboard, i.e., inside, the optical code reader mouse device, if desired.

However, a number of alternate arrangements are possible, as are described herein.

As illustrated in Figure 6, reflected light 204cc is received by the CMOS sensor array 122. Upon receiving the reflected light 204cc, the sensor array 122 generates an electrical data signal along line 204j that is representative of the reflected light 204cc. The data signal may be provided to an image processor 191 along line 204j, or directly to a controller 194 along line 204e. The sensor array 122 data signal is transmitted in timing coordination with the system clock provided on line 204b and the pixel clock provided on line 204f.

Upon receiving the timed data signal along line 204j, the image processor 191 may, for example, store the data signal in memory device 192, or process the data signal and then store the results in memory device 192.

Alternately, the image processor 191 may receive the data signal along line 204j and transmit it to the controller 194 along the signal line 204s, without first processing the data signal.

The image processor 191 may process the data signal in accordance with one or more previously described modes selected by the user. The user, e.g., may define the active mode or modes, as well as provide other user input, via at least one of a trigger signal line 348, a right mouse button signal line 342, a center mouse button signal line 344, or a left mouse button signal line 346.

Alternately, user inputs may be provided via CPU 198. CPU 198 communicates with the USB controller 194 utilizing the USBD+ data signal line 204x and the USBD- data signal line 204w, or alternately by a wireless technique previously described.

These user inputs may be communicated by the controller 194, e.g., along the fast read data signal line 204t to the image processor 191. The image processor 191 then initiates the mode or plurality of modes based upon these user inputs.

Upon initiating the operative mode, the image processor 191 processes the data signal supplied along line 204j by utilizing computer software and/or firmware. Known processing techniques may then be utilized to provide the previously described display outputs.

As shown in Figure 6, the image processor 191 may comprise at least one of a low power field programmable gate array ("FPGA"), a cool complex programmable logic device ("cool CPLD") or an electronically erasable programmable logic device ("EPLD"). An example of an EPLD is the XILINX XC95144XL device. Alternately, the image processor may comprise at least one of the EPLD, the FPGA, the cool CPLD, a microprocessor, or some other related or similar logic technology.

The mouse may comprise an enhanced capabilities port ("ECP") (Microsoft) driver for the transfer of data, e.g., for sending video data to the host. However, because of logistical concerns with the ECP, e.g. the number of conductors and lack of a power supply, the ECP is not currently utilized in a preferred embodiment.

The processed data, and/or video output, is then provided to the USB controller on the data signal line 204s. The USB controller 194 then provides this processed data or video signal as requested, for example, to the CPU 198 by any of the transmission techniques previously described. The USB controller may alternately obtain serial data signal 204e, i.e. "raw " data, from the CMOS sensor array 122, or raw or partially processed data from the processor 191, and provide it as requested, preferably to CPU 198 for processing.

The image processor 191 may also provide an LED control signal 272 for controlling an LED illumination source and pointing device 372. The illumination and pointing device 372 is optional in the practice of the invention. The illumination and pointing device 372, in an illumination mode, may comprise, for example, the strobed LED light source previously described, or may control an array of LEDs that are able to illuminate at varying intensities, depending upon the state of the LED control signal 272.

Alternatively, the illumination and pointing device 372 may be utilized to focus light in order to provide a type of pointing indicator in a "pointing mode. " In the pointing mode, the approximate area to be imaged 132F is distinctly lighted by the imager mouse 100. The pointing mode is utilized by the user in aiming and positioning the imager mouse 100, where the pointing mode enables the user to more easily identify the approximate area that the imager mouse 100 may image or capture.

Also, an LCD viewfinder 290, as previously described for mouse 100, may be controlled by the processor along the LCD Driver Signal Line 204ee.

The sensor array 122 is a CMOS sensor in the arrangement illustrated in Figure 6. A number of sensor arrays may be utilized. For example, an OmniVison OV7110 imager, a Motorola MCM20014/MCM20008 imager, a Photobit P300 imager, a TOSHIBA TCM5003D imager, or an HP 2001 imager, are some of the imagers that may be utilized.

Low resolution and low cost imagers that may be utilized in the practice of the invention, for a mouse mode arrangement with some limited bar code detection, includes the BVL and Rockwell Rp0352 imagers. Another alternative comprises a Rockwell R11024A8 CMOS imager with a USB companion chip.

Of course, these imagers may not be either pin-for-pin compatible, or function for function compatible, with the sensor 122 that is illustrated in Figure 6, but they may be adapted for utilization in the instant invention through know techniques. Thus, Figure 6 illustrates but merely one example of how to connect an imager to a USE controller to practice the instant invention of an imager mouse, when at least some image processing is performed internal to the imager mouse device 100. In other alternate arrangements, the processing may be performed outside the imager mouse device 100.

As illustrated by the examples herein, the sensor array 122 may be a monochrome type sensor, or the sensor array 122 may be implemented as a color sensor.

The sensor array 122 may be implemented utilizing a commercially available sensor array. A currently available sensor utilizes a rectangular pattern type of sensor array. However, in some cases, a cross-hair pattern may be preferable for detecting motion, especially when the imager mouse is primarily used for detecting relative motion between the mouse housing 106 and the surface 130.

Another advantage of the sensor array 122 is that one dimensional bar codes do not need to be aligned, as is required when utilizing a laser type scanner. Thus, the imager mouse is capable of capturing machine decodable symbols "on the fly," unlike conventional optical mice or laser bar code readers.

An electronic shutter is preferably provided. However, a shutter device may be implemented externally, for example, in the variable focus lens assembly 180. The shutter may be either a mechanical or an electronic device.

Also, a "zoom mode" may be provided for utilization with the imager mouse, where a zoom view may be displayed, either on the mouse LCD display or on the computer display device. This would provide a zoom type function for utilizing the mouse as a zoom in and out imager.

To activate the zoom mode, any of the input devices described herein may be utilized. Thus, e.g., the zoom in and zoom out type functions may be controlled by the user utilizing one or more of the mouse buttons.

For example, the user may utilize the four buttons of the mouse 100D of Figure 3D, namely, the four mouse input devices 242, 244, 246, and 248, respectively. The previously designated trigger button for alternating modes may be utilized by the user to trigger the zoom mode. Then, a left and right button may be utilized to zoom in and out, respectively.

The CMOS sensor array 122 receives a system clock signal along line 204b and a 3.3 volt source along line 204a. The CMOS sensor array 122 also receives light 204cc. The CMOS sensor array 122 may receive, as an input, a scan-enable signal along line 204c, a serial-clock signal along line 204d, and may transmit or receive parameter setting signals along line 204e. In one arrangement, there may be, e.g., about 50 parameter settings available. For example, the data8 signal along line 204e may be utilized to send these parameters to the imager, and for reading back the settings that are in place. The data signal along line 204e, when provided by the CMOS sensor array 122, is similar to the data signal along line 204j that may be provided by the CMOS sensor array 122 to the image processor 191.

The image processor 191 also receives a line valid signal along line 204i, a frame valid signal along line 204h, a shutter open signal along line 204g, and a pixel clock signal along line 204f, all from the CMOS sensor array 122. Additionally, the image processor 191 may directly receive, e.g., a 5 or a 3.3 volt source along line 204k, and the system clock signal along line 204b.

The line valid signal along line 204i is for horizontal synchronization, while the frame valid signal along line 204h is for vertical synchronization.

Also, the data signal along line 204j is illustrated as an 8-bit signal line. However, this, and any of the illustrated 8-bit signal lines of Figure 6 may be expanded, e.g., to a 10 or 12 bit signal line with the appropriate sensor, processor, and bus line, if desired by the user.

The voltages specified in this system block diagram, as illustrated in Figure 6, are representational in nature and other voltages may be utilized in the practice of the instant invention. For example, a CMOS sensor array 122 utilizing a voltage lower than 3.3 volts may be preferable, depending upon either the user's preferences, or the imager selected.

The image processor 191 preferably has access to a memory device 192, for example, an SRAM (512Kx8). A minus-chip select signal along line 204m, an address signal along line 204n, a minus-read signal along line 204q, and a minus-write signal along line 204r, are provided between the image processor 191 and the memory device 192. The image processor 191 may also bi-directionally communicate an Rdata signal along line 204p.

Memory device 192 may be utilized to hold at least one entire video image as each video image is processed. The memory device 192 may be enlarged, e.g., if desired to be utilized to hold two or more entire video images.

The data signal along line 204s may be, e.g., data of an equivalent type and may be of a different time period, or data of a completely different type, to the data of the data signal along line 204p,.

Further, another arrangement may provide for an expanded memory device 192 capacity so as to provide a mass storage capability, for example, video images that may be later downloaded from the imaging mouse to, for example, a CPU. Additionally, the mass storage capability may also be implemented for storing a plurality of scanning or code symbol data for later processing or downloading. Expanded memory may also be provided to enhance the self-learning and look-up table techniques previously described.

For example, either a digital signal processor ("DSP") type device, or digital processing implemented in a software technique, may be utilized in the practice of the instant invention. Either may be utilized to provide complete on-board processing within the mouse itself.

In one arrangement a plurality of mouse input devices, providing a plurality of user input signals, are connected to the controller 194, For example, as illustrated in Figure 6, a left mouse button signal along line 346, a center mouse button signal along line 344, a right mouse button signal along line 342, and a trigger signal along line 348 are provided as inputs to the USB controller 194.

It will be understood that it is not required to provide for four physical mouse input devices, e.g., four mouse buttons on the mouse housing. Instead the instant invention may utilize, for example, a "trigger button" that instead comprises utilizing any two of the three mouse buttons of Figures 1A-3C together, at the same time, to initiate a trigger signal. Another alternative is to provide for a trigger signal upon the "double clicking," or "multiple clicking" of any one of the buttons provided on a mouse housing. Also, the input device for the trigger signal line 348 may, for example, be a fourth mouse button, or a microswitch utilized to detect a mouse to surface non-contact condition.

The raw data signal along line 204j to the image processor 191 may be provided at full resolution, or partial resolution, depending upon the operational mode of the mouse. For example, upon a trigger input by the user, the processor may receive either full, or partial, resolution image resolution data. As processors become ever faster and more efficient, a mouse may alternately be configured to continuously provide full resolution data to the processor.

Of course, any mouse button or other mouse input device may be utilized to trigger any of these events or modes of the mouse. Also, for example, drivers may be written and installed with the mouse in the mouse processor, or alternatively on a CPU in communication with the mouse, that use an interception technique to alter the function of the button or input device from what is normally the case, to the unique use for that mode or modes of the imager mouse as practiced in the instant invention. These intercepts may be user defined or predefined and supplied by the user as is desired.

In order to reduce the demand on processor 191, for example, the imager mouse may provide the mouse mode operation of X-Y translational movement detection for a cursor signal by merely detecting a relatively few edges in images and then track the movement of at least one of those edges from frame to frame. Alternatively, if the mouse is in an image capture-type mode, such as a scanner mode, or code symbol mode, the mouse may merely compress the image data and transmit it to a remote CPU 198, for either a continuation of, or complete, processing by the CPU 198.

However, the mouse image processor 191 may process the data and provide a video signal along signal line 204ee for use on the mouse display LCD viewfinder 290, or alternatively, or even in parallel, transmit a video signal to the CPU 198 for display or storage. In either case, the data may be compressed image data that is transmitted or provided as an output from the mouse, or may be video data that may also be compressed, for example, by utilizing an MPEG, MPEG-2, or JPEG compression technique. Compression techniques may be accomplished by a software implementation or by an electrical hardware implementation.

In transmitting any of these forms of data, a controller such as the USB controller illustrated in Figure 6 may be utilized. One example of a USB controller is a high-speed controller model 8X931Ax. Another arrangement of a controller comprises an Anchor brand USB controller, model number AN2135SC.

Also, a low speed controller may be utilized, particularly when the invention is utilized in mouse mode, or a relatively limited amount of data is provided as an output of the mouse device. However, for symbol imaging a high speed controller is preferable.

It will be obvious to one skilled in the art, that utilizing a USB interface teaches bidirectional communications that may allow for a number of configuration capabilities that may be initiated by, e.g., the host or the CPU. Any of these configuration capabilities may be initiated by the host in addition to, or in replacement of, the various physical trigger button arrangements that are described herein.

The imaging mouse device may be alternately implemented in a manner such that the device consumes approximately 100 mA or less. However, in another arrangement, the mouse device merely need consume less than approximately 500 mA, because this is typically made available from a conventional USB controller. Preferably, the USB controller operates at approximately 5 volts, and provides the same voltage to the image processor and other components. Although not shown, a DC-DC regulator or a step-down transformer may be utilized to provide the 3.3 volts that is currently illustrated for the CMOS sensor array 122 and processor 191.

An advantage of utilizing the Anchor USB controller is that at least some data may be processed on board the USB controller itself. Also, the Anchor USB controller provides for memory on board the controller. This helps enable the Anchor USB controller to, for example, provide essentially real time updates of, for example, changes in the drivers utilized for the various mouse buttons, the drivers utilized for various modes of the imager mouse, and the like. In other words, the imager mouse need not have any preset drivers installed but instead may obtain them in approximate real time via the Anchor USB controller.

In Figure 6, the USB controller 194 generates the scan enable signal along line 204c, and the serial clock signal along line 204d, from the CMOS sensor array 122, along with a bidirectional serial data signal along line 204e between the sensor array 122 and the USB controller 194. Thus, the USB controller 194 may provide raw sensor imagery data from the mouse as an output.

Also, the USB controller 194 may be bi-directionally coupled with processor 191 utilizing a processor data signal along line 204s. The USB controller 194 may transmit, to the processor 191, a minus-fast read data ("-FRD") signal along line 204t. Also, the USB controller 194 may receive, from the image processor 191, an over-exposure signal along line 204u and an under-exposure signal along line 204d.

Thus, the USB controller 194 is enabled to provide processed image data as an output, for example, to an on-board LCD viewfinder 290, along a signal line not shown, or to an external CPU 198. In connecting the USB controller 194 with an external CPU 198, a USBD+ data signal along line 204x and a USBD- data signal along line 204w is provided as one arrangement of a two-way data communication link between the USB controller and the external CPU 198. The USE controller may also receive a Vcc source along line 204aa and a ground reference signal along line 204bb from the CPU 198.

In another arrangement, a controller, preferably a USB controller, utilizes at least one of an isochronous, a bulk mode, or an interrupt transfer technique.

Figure 6 illustrates an alternative communication connection between the USB controller and any external device. The USE controller 194 is shown connected to the CPU 198, by utilizing an IRDA 196 infrared connection. For example, a small window port, that is not shown on mouse device 100 or 100d, may be utilized for an infrared output signal along path 204z and an infrared receive signal along path 204y, connecting the controller 194 with the CPU 198.

The infrared IRDA 196 communication link may, for example, provide data at 4 megabits per second.

Of course, any type of radio frequency, electronic, light or acoustic communication technique may be utilized in the practice of this invention, For an example describing an acoustic technique, see U.S. Patent No 5,665,956 to La, et. al., that is also incorporated by reference as though fully set forth herein. Thus, this wireless alternative is not limited to an implementation of an IRDA communication technique, but may comprise any radio, optical, or acoustic links, instead of wires or signal lines.

In Figure 6, the signal lines with a "minus," or "-" sign, indicate "active low" signal lines. Also, in the preferred embodiment, the chip select signal 204m is not utilized, but may be provided for the user that wishes to implement power conservation techniques.

In summary, the imager mouse, as illustrated in Figure 6, is a solid state sensor array 122 connected with an image processor 191 having a memory device 192, and are connected to a controller 194. In another arrangement, the sensor, processor, memory and controller are all located on one electronic device, i.e., one "chip."

Figures 7A-B illustrate block diagrams of alternate arrangements that may also be utilized in the practice of the instant invention.

Figure 7A illustrates a block diagram of a preferred logic arrangement in the practice of the instant invention. Mouse housing 106 contains mouse internal bus 104 connecting the sensor unit 120 with the mouse tail bus 102. The mouse tail bus provides an output data port for mouse 100.

The sensor unit 120 is further comprised of a logical control unit 320 and a logical imaging unit 220. Although not shown, the imaging unit 220 further comprises a sensor array, for example, similar to the sensor array 122 of Figure 6. Also not shown, the control unit 320 of Figure 7A may comprise a controller 194 and an image processor 191, if desired.

In the arrangements of Figures 7A-B, the sensor array of the imaging unit 220 is considered to be pointing along a horizontal axis by receiving light that travels along light path 125. However, a logical arrangement similar to the devices illustrated in Figures 7A-B, may be utilized with an alternative physical arrangement that is considered to be pointing along a vertical axis.

A display signal along line 390 may be provided to connect an LCD display 290 with the sensor unit 120.

A CPU 198 may be connected via the mouse tail bus extension 202 along with a CPU display 298. The sensor unit 120 provides a signal via the control unit 320. This signal may be either in final form, or in need of processing, as desired, so that the CPU 198 may provide the display 298 with a video signal.

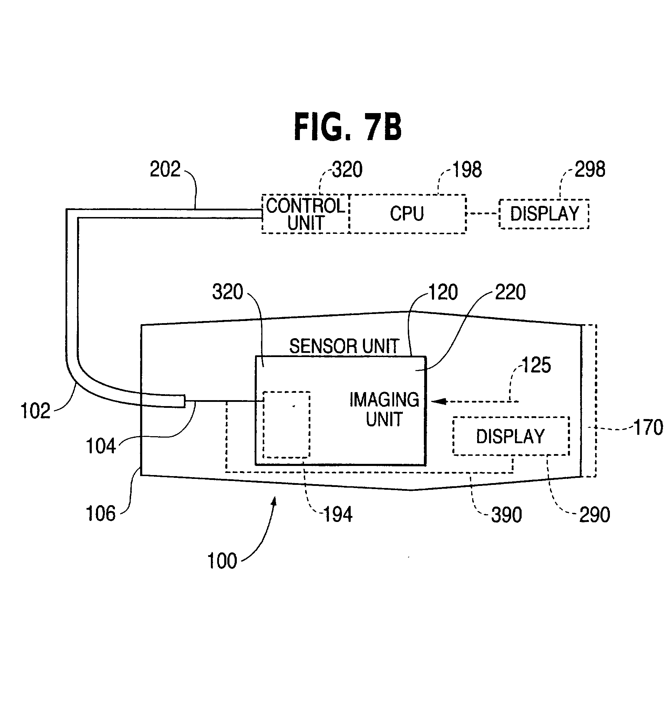

Figure 7B illustrates an alternative logical arrangement in the practice of the instant imaging mouse invention. In Figure 7B, the control unit 320 is logically removed from the mouse 100 and instead, in this example, co-located with the CPU 198. In this arrangement, either raw data, or partially processed imaging data, may be provided by the sensory unit 120 to the control unit 320 for use by the CPU 198.

In this arrangement illustrated in Figure 7B, the sensor unit 120 may comprise, for example, the USB controller 194 as illustrated in Figure 6. The control unit 320 may comprise, for example, the image processor 191 as illustrated in Figure 6.

Other alternative arrangements of the instant mouse invention are many of which but of a few follow.

First, a track ball mouse similar to the mouse 100 illustrated in Figures 1A-C. but with the imager pointing upward toward the user, may be realized. The mouse is utilized as a conventional mouse with a frictionally engaged track ball. However, the Imager is utilized in a similar manner to, e.g., a bar code scanner in a checkout stand of a grocery store, where the area to be scanned is passed over the sensor array, rather than the sensor array relatively moved to the area to be sensed. Once the imaging of, for example, the bar code and like has been completed, the user may continue to use the trackball portion of the mouse for X-Y cursor inforrnation.

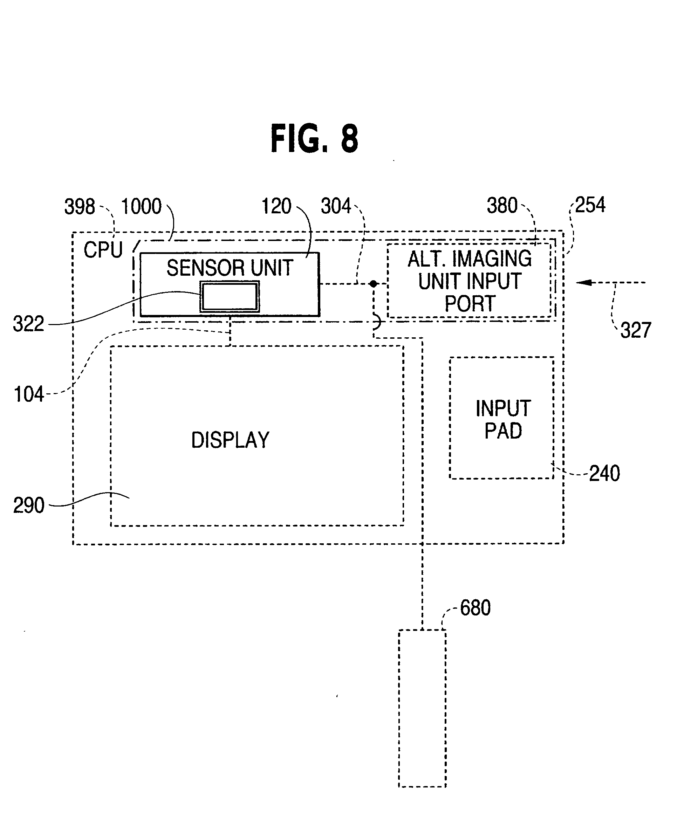

Another embodiment of the instant imaging mouse invention is illustrated in Figure 8. In Figure 8, a CPU 398 comprises an input pad 240, and a display 290 connected via internal mouse bus 104 to sensor unit 120. Sensor unit 120 further comprises a sensor array 322. The sensor unit 120 is preferably connected to an alternate imaging unit input port 380 via an alternate port bus 304. The alternate imaging unit input port 380 may further comprise a second sensor array to image from the alternate imaging unit port area 254.

Alternately, the same imager may be utilized for both the alternate imaging input port location and the sensor array 322 location. In this arrangement, a reflector may be utilized to allow multiple ports. For example, light, that may travel along light path 327, is admitted to the housing of CPU 398 so as to be utilized by sensor unit 120.

A conventional example of CPU 398 for which the instant imaging mouse arrangement may be utilized with, for example, is an AMiTY VP hand held or pen based computer device. Other examples include the AMiTY VPN, and the AMiTY XP hand held computer devices. Other alternate arrangements include, but are not limited to, other hand held or pen based computers, and also any laptop or other portable computer. Also, for example, hand held devices such as the PALM PILOT series, and other PDA type devices, may be utilized in the practice of the instant invention..

In the arrangement illustrated in Figure 8, the imaging mouse device 1000 may analogously provide any or all of the functions, operating modes, and capabilities as described previously for Figures 1 through 7. In one arrangement, the sensory unit 120 and the sensory array 322 are configured with an appropriate lens arrangement, that is not shown, so as to provide the video camera mode for the user. For example, the hand held computer may be propped up, or provided with legs folding out similar to that described for the mouse 100D in Figure 3D, so that a tripod stance may be formed. Also, while CPU 398 utilizes the video camera mode, preferably the user is also able to utilize the handheld CPU 398 in its mode of a portable computer.

Either alternatively, or in addition to the above video conferencing, the handheld CPU 398 utilizes the alternate imaging unit input port 380 and the sensor array port area 254 so as to be utilized in a similar manner to a scanner in a supermarket checkout stand. For example, any machine decodable symbols images, text and the like may be imaged and recognized by the CPU 398.

Alternately, the sensory unit 120 and sensor array 322 may operate in a manner that appears intuitive to the user, preferably in a similar manner to a pressure touch pad on a laptop computer. The sensor array 322 may detect edges of an image of a portion of a hand, e.g., a thumb, fingers, or a palm, and translate the relative motion of the hand or other object that is placed near the sensor array 322 into a relative X-Y displacement, i.e., cursor signal. As another example, a pen pointing device may utilized with the CPU 398, where the pen pointing device may be imaged with or without the hand, depending upon, e.g., the focal length setting and the proximity of the hand and/or object to the sensor. The sensory unit 120 and sensor array 322 may translate the relative motion of almost any object into a cursor signal, that may be represented as a cursor on the display 290.

Alternatively, the sensor array port 254 may provide the input for imaging objects, to obtain the relative motion to control the cursor, if desired.

Of course, in Figures 1-7, preferably the mouse itself is moved by the user, relative to the area to be imaged. However, in the arrangement in Figure 8, the sensor unit, e.g., comprising at least a part of the housing, may remain relatively stationary while the area to be imaged, e.g., the surface, is moved relative to the mouse 1000, by the user.

Although not shown, yet another alternative arrangement is similar to the mouse 1000 as illustrated in Figure 8, except that the sensor array 322 is relocated and further integrated with the alternate imaging unit input port 380, so that a conventional touch pad or the like, although not shown, may be located in the position vacated by the sensor array 322 Thus, the relative X-Y cursor signal is provided conventionally. Again, in this alternate arrangement, only one sensor array may be needed to practice the invention. This alternate arrangement is somewhat analogous to the arrangement as described in Figure 1A-C, wherein a conventional type X-Y relative movement cursor signal generating device is utilized in conjunction with the mouse for imaging, for example, a machine decodable symbol.

In yet another arrangement of the mouse 1000 of Figure 8, a second alternate imaging unit input port and sensor array port area, although not shown, may be provided. For example, the second alternate imaging Unit input port and sensor array port may be located on a side directly opposite the display. Thus, the handheld CPU 398 may, for example, be moved about on a surface by the user to provide either X-Y location data and/or image data, for example, of bar code symbols and the like.

Yet another alternate arrangement provides for a variable focus lens assembly and/or a "dial-a-lens" integrated arrangement so as to provide either a single mode function, or multiple mode functions, as previously described for Figures 1-7.

Yet another alternate arrangement comprises a variable focus lens assembly 180 that may be hinged. Also, the mouse may be mounted upon a hingeable portion of the CPU 398 so that the mouse may "pop up" so as to be more convenient to utilize in a video camera mode, and/or code reader mode. For example, a preferred alternate arrangement is utilized with a pop-up portion that forms, e.g., a 45 degree angle relative to the display surface 290 of the CPU 398 of Figure 8.

Any of the devices described herein, including any of the devices described with respect to Figure 8, may image and store the image data for later use by a computer. Alternately, the devices may provide either a partial or complete on-board processing of the image data, that may be utilized and displayed by the device itself, or transmitted to another device or computer for utilization and display.

As shown in Figure 8, the imaging array need not be contained in the housing itself. Instead, a cable or other wireless techniques described herein may be utilized to allow a handheld device 680 to contain the CCD device or CMOS array imager. The handheld device 680 may provide the image data either in approximate real time, or in storage for later transmission.

Finally, yet another alternate embodiment of the mouse 1000, illustrated in Figure 8, comprises the combination of the above described sensory unit 120 with a touch pad that is not shown. In this arrangement, the touch pad does not displace the sensor array 322 but instead is co-located in the same general position with sensory unit 322, such that the sensor unit 120 may provide for X-Y cursor movement by observing relative movement of an object through its field of view. However, a touch pad type portion is provided as a pressure sensitive device for determination of relative Z axis data. The Z axis is preferably normal to at least one of the view screen surface of the CPU 398 and the touch pad. The sensor array 322 is controlled such that the issuing of X-Y position update commands is stopped when inadequate pressure is realized upon the touch pad area.

Alternately, processing may be utilized to sense when the object is sufficiently out of focus so as to cause the mouse 1000 to stop issuing X-Y position update commands. Also alternatively, a pulsed laser or strobe LED type arrangement may be utilized particularly with the alternate imaging Unit input port 380 in the alternate sensor array port 234 so as to control the stop and start of issuing X-Y position update commands by mouse 1000. Other techniques as described herein may also be utilized to provide Z axis data.

Any of the embodiments of the mouse 100 of Figures 1-7, or the mouse 1000 that is incorporated, e.g., into each of a PDA and the other portable processing devices as described in Figure 8, are understood to be the "mouse" as used in this Application.

The mouse may also be utilized remotely for later downloading.

For example, a wireless battery operated mouse may be utilized remote from a host, e.g., a CPU, to collect one or more sets of data, e.g., machine decodable symbols. The symbols may be stored onboard the mouse, for later processing, or may be processed onboard and then stored. In other words, the data in this example, a barcode symbol, may be stored in either an undecoded or a decoded state, respectively. At a later time, the mouse may be either manually triggered, or automatically triggered, e.g., by being within communication range of a desired host, and then may download the data.

This arrangement may be particularly desirable for a user utilizing a shopping type of application, e.g., such as a home shopping activity that may be found on radio, television, the internet, or via other communicative links. The user utilizes the mouse device in one or more of its modes to scan items, e.g. in a kitchen. Items of user scanning interest may include, for example, the contents of a refrigerator, such as the barcode symbols on each of the items in the refrigerator. Alternately, or additionally, a video of the contents of the, e.g., refrigerator, may be imaged and stored for later download to the host. Alternately or additionally, the user may scan barcodes associated with a list of items desired to be ordered. In this example, when physically moved into the kitchen, the mouse is not within communication range of a desired host. Thus, the mouse may process the symbol fully, and then store the decoded result in its memory. When the user places the mouse back within wireless communication range of the host, the host receives the decoded data from the mouse, and may automatically further utilize the data. For example, the decoded data may be utilized to order items from the shopping application. This further utilization by the host may be user defined, based upon user preferences.

It will be understood by one skilled in the art, that all of the alternate physical and logical arrangements, as described in relation to Figures 1-7, may be selectively applied, as desired, with the arrangements as described for Figure 8, and vice versa.

The invention has been described in reference to particular embodiments as set forth above. However, only the preferred embodiments of the present invention, and but a few examples of its versatility are shown and described in the present disclosure. It is to be understood that the present invention is capable of use in various other combinations and environments, and is capable of changes or modifications within the scope of the inventive concept as expressed herein. Also, many modifications and alternatives will become apparent to one of skill in the art without departing from the principles of the invention as defined by the appended claims.

## Claims

1. An apparatus comprising:
a housing,
an imaging unit attached to the housing and providing electrical signals indicative of an image of a surface,
a control unit coupled to the imaging unit and receiving the electrical signals therefrom, the control unit processing the electrical signals and providing a control signal as an output thereof, the control signal provided in response to movement of an image of the surface as at least one of the housing and the surface move relative to one another,
the control unit is further operable to process the electrical signals for detecting a symbol on the surface and for generating a code indication signal in response thereto,
the apparatus adapted for transmitting the control signal to a computer for controlling a cursor of the computer in response to the relative movement, and for transmitting the code indication signal to the computer.

2. The apparatus as recited in claim 1, wherein the housing moves over the surface, and
the imaging unit incorporates no mechanical elements that move in response to a translational movement of the housing across the surface.

3. The apparatus as recited in claim 1,
the control unit generates the code indication signal when the control signal indicates that the housing is positioned relative to the surface in an area to be sensed.

4. The apparatus as recited in claim 1, wherein
the symbol comprises one of a bar code, a stacked bar code, a matrix code, and a machine decodable image.

5. The apparatus as recited in claim 1, wherein
the control unit is operable in a first mode for generating the control signal, and
the control unit is further operable in a second mode to process the electrical signals for detecting an image of a three dimensional sceneand generating a video signal in response thereto,
the apparatus further adapted for transmitting the video signal to the computer.

6. The apparatus as recited in claim 5, wherein
the housing is adapted so as to be utilized as a video camera.

7. The apparatus as recited in claim 1, further comprising:
an optical lens,
wherein the optical lens cooperates with the imaging unit to provide light to the imaging unit, and wherein
the control unit processes the output from the imaging unit, so as to provide a video signal output, such that the housing may be utilized as a video camera.

8. The apparatus as recited in claim 1, wherein
the housing allows for ambient illumination of at least a part of the surface.

9. The apparatus as recited in claim 1, wherein
the housing contains a light source for illuminating the image.

10. The apparatus as recited in claim 1, further comprising:
a light path modifier mounted within the housing, wherein
the light path modifier is positionable to direct light from the surface toward the imaging unit.

11. The apparatus as recited in claim 10, wherein
the light path modifier comprises a reflector.

12. The apparatus as recited in claim 1, wherein
the housing contains the imaging unit, and wherein
the housing further comprises a first light-transmissive window and a second light-transmissive window, the second light-transmissive window substantially perpendicular to the first light transmissive window, and wherein
a beam splitter is mounted to the housing to direct a portion of the light from the surface, after the light passes through the first light-transmissive window, to the imaging unit, and
the beam splitter transmitting a remaining portion of the light to pass through the second light-transmissive window for viewing by an operator of the apparatus.

13. The apparatus as recited in claim 1, wherein
the apparatus generates an illumination of at least a part of the surface by providing at least one of a strobe-light and a pulsed laser.

14. The apparatus as recited in claim 13, wherein
the strobe-light comprises a synchronized array of LED's.

15. The apparatus as recited in claim 1, further comprising:
a light source coupled with the control unit for illuminating the surface,
a viewfinder mounted to the housing for providing a view of an area being scanned by the imaging unit.

16. The apparatus as recited in claim 1, wherein
the control unit is operable in a first mode for generating the control signal, and
the control unit is further operable in a second mode to process the electrical signals for detecting a two-dimensional symbol and for generating a two-dimensional signal in response thereto,
the apparatus adapted for transmitting the control signal to the computer for controlling a cursor of the computer in response to the relative movement, and for transmitting the two-dimensional signal to the computer.

17. The apparatus as recited in claim 16, wherein
the two-dimensional symbol is electronically painted, and the electronic painting is displayed.

18. The apparatus as recited in claim 1, wherein
the imaging unit is responsive to an output from the control unit, the control unit comprising:
an image processor responsive to the electrical signals from the imaging unit for providing processor data at an output thereof,
a memory coupled with the image processor, the image processor utilizing the memory for storage and retrieval of processor data, and
a controller responsive to the processor data for generating the control signal.

19. An apparatus as recited in claim 18, wherein
the controller comprises a USB controller.

20. An apparatus as recited in claim 1, wherein
the imaging Unit comprises a charge coupled device.

21. An apparatus as recited in claim 1, wherein
the imaging unit comprises a CMOS imaging array.

22. An apparatus as recited in claim 1, wherein
the imaging unit provides the electrical signals indicative of an image of material fibers in the surface.

23. An apparatus as recited in claim 1, wherein
the housing comprises a computer mouse.

24. An apparatus as recited in claim 1, wherein the housing comprises a portable data processing device.

25. An apparatus as recited in claim 24 wherein the portable data processing device comprises one of a laptop computer, a handheld computer, and a PDA.

26. An apparatus as recited in claim 1, wherein
the control unit comprises a processor, and wherein
the processor utilizes a self-learning mode in processing the electrical signals.

27. A method of sensing relative movement and symbols utilizing a computer mouse, comprising the steps of:
sensing light from a surface containing a symbol, the sensing performed by an imaging unit,
generating electrical signals in response to the sensed light,
processing the electrical signals, for generating a control signal indicative of relative movement of the imaging unit and the surface, and for generating code indication signals corresponding to the symbol,
transmitting the control signal to a computer for controlling a cursor of the computer, and
transmitting the code indication signals for further processing by the computer.

28. A method as recited in claim 27, further comprising the step of:
illuminating at least a part of the surface.

29. A method as recited in claim 28, wherein
illuminating at least a part of the surface comprises allowing ambient light to reach the surface.

30. A method as recited in claim 27, further comprising the step of:
optically directing the light from the surface, towards the imaging unit prior to sensing.

31. A method as recited in claim 30, wherein
the step of optically directing the light comprises changing a focal length property of a lens system.

32. A method as recited in claim 27, further comprising the step of:
manually initiating a trigger *state* to condition the generating of the electrical signals.

33. A method as recited in claim 27, further comprising the step of
manually initiating a trigger state to condition the processing of the electrical signals.

34. A method as recited in claim 27, further comprising the step of:
moving the mouse over the surface, the surface remaining relatively stationary.

35. A method as recited in claim 27, wherein
the symbol comprises one of a bar code, a stacked bar code, a matrix code, and a machine decodable image.

36. A computer mouse apparatus comprising:
a housing moveable across a surface,
an imaging unit attached to the housing and providing electrical signals indicative of an image of the surface, the imaging unit comprising one of a CMOS array and a CCD device,
a control unit coupled to the imaging unit and receiving the electrical signals therefrom, the control unit processing the electrical signals and providing image signals as an output thereof,
an incremental encoder, providing a control signal as an output thereof, in response to mechanical movement of an encoder element, as the mouse moves across the surface,
the mouse adapted for transmitting the control signal from the control unit output to a computer for controlling a cursor of a display, and
the mouse further adapted for transmitting the image signals from the control unit output to the computer.

37. The computer mouse apparatus as recited in claim 36, wherein
the control unit is further operable to process the electrical signals for detecting a symbol on the surface and for generating a code indication signal in response thereto, wherein
the symbol comprises a machine decodable image.

38. A computer mouse apparatus as recited in claim 36, wherein
the control unit comprises a USB controller.

39. A method for imaging with a mouse, comprising
a. imaging an area to be sensed,
b. generating a first image signal representing the area to be sensed,
c. generating a first position signal representative of a location of the first image signal,
d. generating a second image signal,
e. generating a second position signal representative of a location of the second image signal,
f. generating an assembled image signal by utilizing the first and second image signals and the first and second position signals.

40. A method for imaging with a mouse as recited in claim 39, further comprising the steps of
generating a code indication signal in response to the assembled image signal,
providing an output adaptable for transmitting the code indication signal to a computer.

41. A method for imaging with a mouse as recited in claim 39, further comprising the steps of:
processing the assembled image signal for detecting a symbol on the surface,
generating a code indication signal in response thereto,
providing an output adaptable for transmitting the code indication signal to a computer.

42. A method for imaging with a mouse as recited in claim 41, wherein
the symbol comprises a two-dimensional machine decodable image.

43. A method for imaging with a mouse as recited in claim 39, further comprising the step of:
displaying an approximate real-time image corresponding to the assembled image signal generation.

44. A method for imaging with a mouse as recited in claim 43, further comprising the step of:
displaying a partially assembled image comprising at least one void.

45. A method for imaging with a mouse as recited in claim 44, further comprising the step of:
moving the mouse to position a displayed cursor over the at least one void to image the at least one void.

46. A method for imaging with a mouse as recited in claim 44, wherein
the assembled image and the void are graphically represented on a computer display device utilizing at least one of
contrasting colors, and
contrasting gray scales, respectively.

47. A method for imaging with a mouse as recited in claim 44, wherein
the displaying the partially assembled image utilizes at least one of
a thumbnail sketch view,
a window view, and
a full screen view.

48. A method for detecting a non-translational movement of a computer mouse, comprising the steps of:
a. generating a first and second light levels as an output, the output incident on at least a portion of a surface to be imaged,
b. sensing reflected light from the surface in synchronization with the generation of at least one of the first and second light levels ,
c. determining if the sensed light is above a predetermined threshold limit, and if so,
i. generating a translational position update signal as an output, and if not,
ii. preventing the generation of the translational position update signal as an output,
wherein the translational position update signals are adaptable for controlling a cursor on the computer.

49. A method for detecting a non-translational movement of a computer mouse, comprising the steps of:
a. imaging at least a portion of a surface to be imaged,
b. generating an image signal representative of at least a portion of the area to be imaged,
c. processing the image signal to determine whether the mouse is within a predetermined threshold focal length from at least a portion of the area to be imaged, and wherein, if so, the computer mouse
i. generates a translational position update signal as an output, and if not,
ii. withholds the generation of a translational position update signal as an output.

50. A method for detecting a non-translational movement of a computer mouse, as recited in claim 49, wherein the translational position update signals are adaptable for controlling a cursor on the computer.

51. A method for detecting a non-translational movement of a computer mouse, comprising the steps of:
a. generating a first signal in response to a first condition of a contact sensing device,
b. generating a second signal in response to a second condition of a contact sensing device, wherein the computer mouse
i. generates a translational position update signal as an output in response to the first signal, and
ii. prevents the generation of the translational position update signal as an output in response to the second signal.

52. A method for detecting a non-translational movement of a mouse as recited in claim 51, wherein
the contact sensing device further comprises at least one microswitch.

53. A method for detecting a non-translational movement of mouse as recited in claim 51, wherein
the contact sensing device further comprises at least one physical pressure responsive device.

54. A computer mouse comprising:
a housing,
an imaging unit attached to the housing and providing image signals indicative of an image of a surface, the surface containing a symbol,
the mouse adapted for transmitting the image signals to a computer for controlling a cursor of the computer in response to relative movement between the mouse and the surface, and for processing the image signals to decode the symbol.

55. The computer mouse as recited in claim 54, wherein
the symbol is one of a bar code, a stacked bar code, a matrix code, and a machine decodable image.

56. A computer mouse apparatus comprising:
a housing movable across a surface,
an imaging unit attached to the housing and providing electrical signals indicative of an image of the surface, the surface containing a symbol,
an incremental encoder, providing a control signal as an output thereof, the control signal in response to mechanical movement of an encoder element as the mouse moves across the surface,
the mouse adapted for transmitting the control signal from the control unit output to a computer for controlling a cursor of a display, and,
the mouse further adapted for transmitting the electrical signals from the controller output to the computer for processing.

57. The computer mouse apparatus as recited in claim 56, wherein
the imaging unit comprises one of a CMOS array and a CCD device,
the image is a symbol comprising one of a bar code, a stacked bar code, matrix code, a machine decodable image, and an alphanumeric symbol, and
the image signal processing comprises decoding the symbol.

58. A portable computer apparatus comprising:
a portable laptop computer having a housing, wherein at least one of the housing and a surface are movable relative to each other,
an imaging unit attached to the housing and providing electrical signals indicative of an image of a symbol on the surface, the imaging unit incorporating one of a CMOS array and CCD device, and
a control unit coupled to the imaging unit and receiving the electrical signals therefrom, the control unit decoding the electrical signals and providing data signals to the laptop computer.

59. A portable computer apparatus comprising:
a portable handheld computer having a housing, wherein at least one of the housing and a surface are movable relative to each other,
an imaging unit attached to the housing and providing electrical signals indicative of an image of a symbol on the surface, the imaging unit incorporating one of a CMOS array and CCD device, and
a control unit coupled to the imaging unit and receiving the electrical signals therefrom, the control unit decoding the electrical signals and providing data signals to the handheld computer.

60. A portable computer apparatus comprising:
a pen based computer having a housing, wherein at least one of the housing and a surface are movable relative to each other,
an imaging unit attached to the housing and providing electrical signals indicative of an image of a symbol on the surface, the imaging unit incorporating one of a CMOS array and CCD device, and
a control unit coupled to the imaging unit and receiving the electrical signals therefrom, the control Unit decoding the electrical signals and providing data signals to the pen based computer.

61. A portable apparatus comprising:
a PDA having a housing, wherein at least one of the housing and a surface are movable relative to each other,
an imaging unit attached to the housing and providing electrical signals indicative of an image of a symbol on the surface, the imaging unit incorporating one of a CMOS array and CCD device, and
a control unit coupled to the imaging unit and receiving the electrical signals therefrom, the control unit decoding the electrical signals and providing data signals to the PDA.

62. A portable computer apparatus comprising:
a portable laptop computer having a housing, wherein at least one of the housing and a surface are movable relative to each other,
an imaging unit attached to the housing and providing electrical signals indicative of an image of a symbol on the surface, the imaging unit incorporating one of a CMOS array and CCD device, and
the laptop computer coupled to the imaging unit and receiving the electrical signals therefrom, for performing at least one of decoding and storing the electrical signals.

63. A portable computer apparatus comprising:
a pen based computer having a housing, wherein at least one of the housing and a surface are movable relative to each other,
an imaging unit attached to the housing and providing electrical signals indicative of an image of a symbol on the surface, the imaging unit incorporating one of a CMOS array and CCD device, and
the pen based computer coupled to the imaging unit and receiving the electrical signals therefrom, for performing at least one of decoding and storing the electrical signals.

64. A portable apparatus comprising:
a PDA having a housing, wherein at least one of the housing and a surface are movable relative to each other,
an imaging unit attached to the housing and providing electrical signals indicative of an image of a symbol on the surface, the imaging unit incorporating one of a CMOS array and CCD device, and
the PDA coupled to the imaging unit and receiving the electrical signals therefrom, for performing at least one of decoding and storing the electrical signals.

65. An apparatus comprising:
a housing,
an imaging unit attached to the housing and providing electrical signals indicative of an image of a surface, the imaging unit comprising one of a CMOS array and a CCD device,
a control unit coupled to the imaging unit and receiving the electrical signals therefrom, the control unit processing the electrical signals for detecting a symbol on the surface and providing a code indication signal as an output thereof,
the apparatus further adapted for transmitting the code indication signals from the control unit as an output.

66. The apparatus as recited in claim 65, wherein
the apparatus is further adapted for transmitting the code indication signals from the control unit output to a computer.

67. The computer mouse apparatus as recited in claim 65, wherein
the control unit is further operable to process the electrical signals for generating image signals as an output thereof; and wherein
the symbol comprises a machine decodable image.

68. A computer mouse apparatus as recited in claim 65, wherein
the control unit comprises a USB controller.

69. A computer mouse apparatus as recited in claim 65, wherein
the imaging unit comprises no moving parts.
